# EUROPEAN PATENT APPLICATION

(11) **EP 4 596 512 A1**
(43) Date of publication of application: **06.08.2025**
(21) Application number: 23872558.4
(22) Date of filing: 28.09.2023
(51) Int. Cl.: C03C 27/12, B32B 7/02, B32B 17/10

(54) **INTERLAYER FILM FOR LAMINATED GLASS, PRODUCTION METHOD THEREFOR, AND LAMINATED GLASS**

(30) Priority: 30.09.2022 JP 2022158981
(71) Applicant: SEKISUI CHEMICAL CO., LTD., Osaka-shi Osaka 530-8565 (JP)
(72) Inventor: ISHIDA, Jun, 6045JB Roermond (NL)
(74) Representative: Ter Meer Steinmeister & Partner
(86) International application number: PCT/JP2023/035515
(87) International publication number: WO 2024/071338

(57) **Abstract**

An interlayer film for laminated glass, comprising two or more resin layers, wherein at least one of the resin layers has a glass transition temperature different from that of the other resin layer or layers, and
wherein
the two or more resin layers include a low-Tg resin layer having the lowest glass transition temperature among the two or more resin layers,
the interlayer film for laminated glass has a thickness ratio of the low-Tg resin layer to the entire interlayer film, R(x), wherein x [mm] represents a coordinate on a straight line from one end of the interlayer film to the other end, and
the difference between the maximum and minimum values of the thickness ratio R(x) is 8% or less.

## Description

### Technical Field

The present invention relates to an interlayer film for laminated glass and laminated glass.

### Background Art

Laminated glass is safer because it is less prone to shards of glass flying off in the event of breakage due to external impact. Accordingly, laminated glass is widely used for window pane of various vehicles such as automobiles, railcars, aircraft, and ships and also of buildings. As laminated glass, there are widely known those obtained by interposing an interlayer film for laminated glass between a pair of glass sheets and integrating them, wherein the interlayer film contains a resin component such as polyvinyl acetal resin or ethylene/vinyl acetate copolymer resin.

As an interlayer film for laminated glass, there are conventionally known a soundproof interlayer film including a resin layer having a low glass transition temperature (low-Tg resin layer) in the interlayer film to enhance the soundproof performance (see, for example, PTL 1). The soundproof interlayer film generally includes a high-Tg resin layer, which has a high glass transition temperature, in addition to the low-Tg resin layer in order to ensure the mechanical strength and adhesiveness to the glass member for lamination, etc. It is also widely known that the soundproof interlayer film is generally formed by co-extrusion.

### Citation List

### Patent Literature

PTL 1: JP2016-183077A

### Summary of Invention

### Technical Problem

In the co-extrusion of the soundproof interlayer film, however, it is heretofore difficult to form a low-Tg resin layer having a thickness uniform in the widthwise direction, and the fact is that there are variations in the thickness. If there is variation in the thickness in the widthwise direction, the soundproof performance also varies among regions, and it is difficult to sufficiently enhance the soundproof performance of the interlayer film as a whole.

Therefore, an object of the present invention is to provide an interlayer film for laminated glass that has less variation in the soundproof performance among regions and can thus deliver sufficiently enhanced soundproof performance.

### Solution to Problem

As a result of earnest studies, the present inventor has found that the above-described object can be achieved by enhancing the accuracy of the thickness of the low-Tg resin layer when produced so that the difference between the maximum and minimum values of the thickness ratio of the low-Tg resin layer to the entire interlayer film for laminated glass, R(x), keeps a predetermined value or less, and thus the inventor has accomplished the present invention below. Specifically, the present invention provides the following [1] to [21].
[1] An interlayer film for laminated glass, comprising two or more resin layers, wherein at least one of the resin layers has a glass transition temperature different from that of the other resin layer or layers, and
   wherein
   the two or more resin layers include a low-Tg resin layer having the lowest glass transition temperature among the two or more resin layers,
   the interlayer film for laminated glass has a thickness ratio of the low-Tg resin layer to the entire interlayer film, R(x), wherein x [mm] represents a coordinate on a straight line from one end of the interlayer film to the other end, and
   the difference between the maximum and minimum values of the thickness ratio R(x) is 8% or less.
[2] An interlayer film for laminated glass, wherein when the interlayer film is trisected into regions from one end of the interlayer film to the other end, each of the regions has a primary resonance frequency as determined by mechanical impedance measurement in accordance with ISO 16940:2008, and the absolute value of the difference between the maximum and minimum values of the primary resonance frequency is 50 Hz or less.
[3] An interlayer film for laminated glass, wherein when the interlayer film is trisected into regions from one end of the interlayer film to the other end, each of the regions has a loss factor as determined by mechanical impedance measurement in accordance with ISO 16940:2008, and the absolute value of the difference between the maximum and minimum values of the loss factor is 0.1 or less.
[4] The interlayer film for laminated glass according to [1], wherein a standard deviation of a deviation ΔR(x) of the thickness ratio R(x) with respect to f(x) is 0.1% or more and 2% or less, wherein f(x) is an approximate primary straight line f(x)=ax+b calculated from the thickness ratios R(x) and the coordinates x in a range of x=0.1X to 0.9X, wherein the straight line from one end of the interlayer film to the other end has a whole length of 1.0X, and a and b are each a coefficient.
[5] The interlayer film for laminated glass according to [2] or [3], comprising two or more resin layers, wherein at least one of the resin layers has a glass transition temperature different from that of the other resin layer or layers, and the two or more resin layers include a low-Tg resin layer having the lowest glass transition temperature among the two or more resin layers, and
   wherein a standard deviation of a deviation ΔR(x) of the thickness ratio R(x) to f(x) is 0.1% or more and 2% or less, wherein R(x) is a thickness ratio of the low-Tg resin layer to the entire interlayer film, wherein x [mm] represents a coordinate on a straight line from one end of the interlayer film to the other end, and f(x) is an approximate primary straight line f(x)=ax+b calculated from the thickness ratios R(x) and the coordinates x in a rage of x=0.1X to 0.9X, wherein the straight line from one end of the interlayer film to the other end has a whole length of 1.0X, and a and b are each a coefficient.
[6] The interlayer film for laminated glass according to [1], [4] or [5], wherein the difference between the maximum and minimum values of the thickness ratio R(x) is more than 0%.
[7] The interlayer film for laminated glass according to [1], [4], [5] or [6], wherein the thickness ratio R(x) is within a range of 1% or more and 30% or less.
[8] The interlayer film for laminated glass according to any one of [1] to [7], having a wedge-shaped portion with a wedge angle of 0.1 mrad or more in a cross section thereof.
[9] The interlayer film for laminated glass according to [8], wherein the wedge-shaped portion has a portion at which the wedge angle changes.
[10] The interlayer film for laminated glass according to any one of [1] to [9], wherein a thickness thereof at one end is different from that at the other end.
[11] The interlayer film for laminated glass according to any one of [1] to [10], comprising two or more resin layers, wherein at least one of the resin layers has a glass transition temperature different from that of the other resin layer or layers,
   wherein
   the two or more resin layers include a low-Tg resin layer having the lowest glass transition temperature among the two or more resin layers,
   the low-Tg resin layer is arranged so as to be off-center in the thickness direction toward either one of main surface side.
[12] The interlayer film for laminated glass according to any one of [1] to [11], comprising two or more resin layers, wherein at least one of the resin layers has a glass transition temperature different from that of the other resin layer or layers,
   wherein
   the two or more resin layers includes a low-Tg resin layer having the lowest glass transition temperature among the two or more resin layers,
   the low-Tg resin layer is present at the center in the thickness direction.
[13] The interlayer film for laminated glass according to any one of [1] to [12], comprising two or more resin layers, wherein at least one of the resin layers has a glass transition temperature different from that of the other resin layer or layers, and the two or more resin layers includes two or more low-Tg resin layers each having the lowest glass transition temperature among the two or more resin layer or layers.
[14] The interlayer film for laminated glass according to any one of [1] to [13], having a region including a colorant.
[15] The interlayer film for laminated glass according to any one of [1] to [14], comprising one or more resin layers, wherein any of the resin layers is a resin layer having a refractive index of 1.46 or more and a glass transition temperature of 15°C or more.
[16] The interlayer film for laminated glass according to any one of [1] to [14], comprising one or more resin layers, wherein at least either one of main surfaces of the interlayer film for laminated glass has a ten point height of roughness profile Rzjis94 of 10 µm or more.
[17] The interlayer film for laminated glass according to any one of [1]to [14], comprising one or more resin layers, wherein any of the resin layers is a resin layer having a refractive index of 1.46 or more and a glass transition temperature of 15°C or more, and
   at least either one of main surfaces of the interlayer film for laminated glass has a ten point height of roughness profile Rzjis94 of 10 µm or more.
[18] The interlayer film for laminated glass according to any one of [1] to [17], comprising one or more resin layers, wherein any of the resin layers comprises at least one selected from the group consisting of a polyvinyl acetal resin and an ethylene/vinyl acetate copolymer resin.
[19] A method for producing an interlayer film for laminated glass, comprising co-extrusion to produce the interlayer film for laminated glass according to any one of [1] to [18].
[20] Laminated glass comprising the interlayer film for laminated glass according to any one of [1] to [19] and a pair of glass members for laminated glass, the interlayer film for laminated glass interposed between the glass members for laminated glass.
[21] The laminated glass according to [20], wherein the glass members for laminated glass are either bent glass or flat glass.

### Advantageous Effect of Invention

The present invention can provide an interlayer film for laminated glass that has less variation in the soundproof performance among regions and can thus deliver sufficiently enhanced soundproof performance.

### Brief Description of Drawings

[Fig. 1] Fig. 1 is a cross section illustrating one example of the interlayer film for laminated glass.
[Fig. 2] Fig. 2 is a cross section illustrating one example of the interlayer film for laminated glass.
[Fig. 3] Fig. 3 is a cross section illustrating one example of the interlayer film for laminated glass.
[Fig. 4] Fig. 4 is a cross section illustrating one example of the interlayer film for laminated glass.
[Fig. 5] Fig. 5 is a cross section illustrating one example of the interlayer film for laminated glass.

### Description of Embodiments

Embodiments of the present invention will be described in more detail below.

### <Interlayer Film for Laminated Glass>

In one aspect, the interlayer film for laminated glass (hereinafter also simply referred to as "interlayer film") of the present invention comprises two or more resin layers, and at least one of the resin layers has a glass transition temperature different from that of the other resin layer(s). In the descriptions below, a resin layer that has the lowest glass transition temperature among the two or more resin layers in the interlayer film is also referred to as "the low-Tg resin layer".

### <Requirement (A)>

In one aspect, the interlayer film of the present invention satisfies Requirement (A) below.

Requirement (A): the interlayer film has a thickness ratio of the low-Tg resin layer to the entire interlayer film, R(x), wherein x [mm] represents a coordinate on a straight line from one end of the interlayer film to the other end, and the difference between the maximum and minimum values of the thickness ratio R(x) (hereinafter also referred to as "ΔR(x)") is 8% or less.

If the interlayer film has a ΔR(x) larger than 8%, the variation in the soundproof performance among regions may not be prevented to thereby fail to sufficiently enhance the soundproof performance of the interlayer film as a whole.

In view of enhancing the soundproof performance, the ΔR(x) is preferably 7% or less, more preferably 6% or less, even more preferably 5% or less, still more preferably 3.5 % or less.

In view of the soundproof performance, a smaller ΔR(x) is more preferred. The ΔR(x) may be 0% or more, and in view of manufacturing with a practical manufacture efficiency in the production, the ΔR(x) is preferably more than 0%, more preferably 0.2% or more, even more preferably 0.4% or more, still more preferably 0.6% or more.

Herein, the direction from one end of the interlayer film to the other end is referred to as the widthwise direction, and the direction perpendicular to the widthwise direction and the thickness direction of the interlayer film is referred to as the lengthwise direction. Generally, the widthwise direction and the lengthwise direction are the directions corresponding to the TD and the MD, respectively, but not limited thereto. The MD is the Machine Direction, which corresponds to the direction of the flow of the resin, and the TD is the Transverse Direction.

It is preferable that the thickness of the interlayer film should be substantially uniform in the lengthwise direction. In a case where the interlayer film 10 is applied to bent glass, which will be described later, the interlayer film is stretched and curved so that the widthwise direction etc. is also curved. The lengthwise direction and the widthwise direction of the curved interlayer film are each a direction curved along the curve of the interlayer film, and the straight line from one end of such an interlayer film to the other end is also curved.

In the present invention, the difference between the maximum and minimum values of the thickness ratio R(x) can be decreased as described above by adjusting the thickness of the low-Tg resin layer according to the thickness of the interlayer film. Specifically, in a case where the thickness of the interlayer film is substantially uniform from one end to the other end, it is preferable to also adjust the thickness of the low-Tg resin layer so as to be almost uniform. In a case where the thickness of the interlayer film changes from one end to the other end as in a wedge-shaped interlayer film, it is preferable to also adjust the thickness of the low-Tg resin layer so as to change according to it.

Generally, a multilayered interlayer film having a low-Tg resin layer is formed by co-extrusion. In co-extrusion, respective resins for the layers join in a feed block and are extruded from a die (T-die), and at that time, the resins spread out in TD (the widthwise direction) while extruded. Here, in a case where the multilayered interlayer film has a low-Tg resin layer, the resin or resin composition for the low-Tg resin layer is different from the resin or resin composition for the high-Tg resin layer in characteristics including the viscosity. Accordingly, because of such differences in characteristics, one resin layer enters the other resin layer when the resins spread out in the widthwise direction, and it may be thus difficult to form a low-Tg resin layer having a thickness uniform in the widthwise direction.

In the present invention, it is preferable to check the thickness of each resin layer to be actually obtained and then adjust the space at each coordinate in the widthwise direction (TD) at any point in the flow path including the feed block and the slit for each resin layer in the die for multilayer, to thereby adjust the thickness of the low-Tg resin layer so as to be uniform according to the uniform thickness of the interlayer film, as will be described for a production method later. In this manner, the thickness ratio R(x) can be decreased in an interlayer film having a thickness substantially uniform in the widthwise direction.

Also in a case where the thickness of the interlayer film changes as with a wedge-shaped interlayer film, the thickness of each resin layer to be actually obtained can be checked and then the space at each coordinate in the widthwise direction (TD) can be adjusted at any point in the flow path including the feed block and the slit for each resin layer in the die for multilayer, to finely change the thickness of the low-Tg resin layer according to the change of the thickness of the interlayer film. Thus, the thickness ratio R(x) can be decreased in an interlayer film having a thickness that changes in the widthwise direction.

In the present invention, the ΔR(x) can be determined in the following manner. Specifically, the thickness of the entire interlayer film for laminated glass and the thickness of the low-Tg resin layer are measured at each coordinate x [mm] at 5-cm intervals from one end to the other end in the widthwise direction, and the thickness ratio R(x) at each coordinate x [mm] is obtained. Then, among all of the thickness ratios R(x) obtained, the largest value is used as the maximum value of the thickness ratio R(x), and the smallest value is used as the minimum value of the thickness ratio R(x). The ΔR(x) can be obtained by determining the difference between the maximum and minimum values.

Here, the thickness ratio R(x) is the ratio of the thickness of the low-Tg resin layer to the thickness of the entire interlayer film, in percentage terms. In a case where two or more low-Tg resin layers are provided, the "thickness of the low-Tg resin layer" is the total thickness of all the low-Tg resin layers.

The measurement of the thicknesses may be carried out at arbitral position in the lengthwise direction of the interlayer film, and for example, may be carried out at lengthwise center position.

The data of the thickness can be obtained using a microscope, and the data of the thickness of each resin layer, including the thickness of the high-Tg resin layer and that of the low-Tg resin layer, can be obtained using a microscope (e.g., microscope "DSX500" manufactured by Olympus Corporation or its equivalent). Specifically, the interlayer film is cut in the direction perpendicular to the above-described straight line from one end to the other end to obtain a cross section in the thickness direction at each coordinate x [mm]. The cross section is observed under a microscope to determine the boundary between resin layers, and the thickness of each resin layer at each coordinate x [mm] is calculated.

The thickness of the entire interlayer film can be obtained as the total thickness of all of the resin layers.

However, it is the thickness of the entire interlayer film as measured using a known thickness measurement gauge that can serve as the basis of the calculation of the wedge angle, which will be described layer. Examples of the thickness gauge used for the measurement of the thickness of the entire interlayer film include a contact type thickness measurement system "TOF-4R" (manufactured by Yamabun Electronics Co., Ltd.). When TOF-4R is used, the measurement of the thickness is carried out in the widthwise direction at a transportation velocity of 1 to 3 m/min. As a thickness measurement gauge for an interlayer film after the interlayer film is incorporated into laminated glass, a non-contact thickness measurement gauge for multilayer film "OPTIGAUGE" (manufactured by LUMETRICS) can be used, for example.

In a case where Requirement (A) is satisfied in the present invention, the thickness ratio R(x) is preferably within a range of 1% or more and 30% or less. A thickness ratio R(x) of 1% or more can impart sufficient soundproof performance to the interlayer film. On the other hand, a thickness ratio R(x) of 30% or less means that the interlayer film includes, in addition to the low-Tg resin layer, a resin layer having a thickness equal to or larger than a certain level, which brings about favorable properties including penetration resistance, ease to handle, mechanical strength, and adhesiveness to glass member of the laminated glass. Thus, the interlayer film can be suitably used as an interlayer film for laminated glass.

In view of the soundproof performance, the thickness ratio R(x) is more preferably 3% or more, even more preferably 5% or more, still more preferably 7% or more, yet still more preferably 8% or more, yet still more preferably 9% or more, yet still more preferably 10% or more. In view of penetration resistance, ease to handle, mechanical strength, and others, the thickness ratio R(x) is more preferably 28% or less, even more preferably 26% or less, still more preferably 24% or less, yet still more preferably 22% or less, yet still more preferably 20% or less.

Any of the above-described lower limits and any of the above-described upper limits can be arbitrarily combined.

The thickness ratio R(x) being within a given range means that both the maximum and minimum values of the thickness ratio R(x) are within the given range.

### <Requirement (B)>

In another aspect, the interlayer film of the present invention satisfies Requirement (B) below.

Requirement (B): when the interlayer film is trisected into regions from one end of the interlayer film to the other end, each of the regions has a primary resonance frequency as determined by mechanical impedance measurement (MIM) in accordance with ISO 16940:2008, and the absolute value of the difference between the maximum and minimum values of the primary resonance frequency (hereinafter, also referred to as "ΔPR") is 50 Hz or less.

If the interlayer film has a ΔPR more than 50 Hz, the variation in the soundproof performance among regions may not be prevented to thereby fail to sufficiently enhance the soundproof performance of the interlayer film as a whole.

In view of the soundproof performance, the ΔPR is preferably 35 Hz or less, preferably 25 Hz or less, more preferably 20 Hz or less, even more preferably 15 Hz or less, still more preferably 10 Hz or less.

In view of the soundproof performance, a smaller ΔPR is more preferred. The ΔPR may be 0 Hz or more, and in view of manufacturing with a practical manufacture efficiency in the production, the ΔPR is preferably more than 0 Hz, more preferably 0.1 Hz or more, more preferably 0.5 Hz or more, even more preferably 1 Hz or more, still more preferably 2 Hz or more.

The ΔPR can be reduced by decreasing the above-described difference between the maximum and minimum values of the thickness ratio R(x) of the low-Tg resin layer to the interlayer film, and can be further reduced easily by additionally decreasing the standard deviation of the thickness ratio R(x), which will be described later.

In a case where Requirement (B) is satisfied, the primary resonance frequency may be in, for example, a range of 50 Hz or more and 250 Hz or less, and is preferably within a range of 75 Hz or more and 225 Hz or less, more preferably within a range of 100 Hz or more and 200 Hz or less. An interlayer film having a primary resonance frequency within a given range tends to deliver suitable soundproof performance. The primary resonance frequency being within a given range means that all of the primary resonance frequencies measured after trisection are within the given range.

The mechanical impedance measurement (MIM) in Requirement (B) described above and Requirement (C), which will be described later, is carried out in accordance with ISO 16940:2008 on laminated glass prepared by adhering two clear glass sheets to each other via an interlayer film. The following manner may be carried out: the interlayer film is trisected into regions from one end of the interlayer film to the other end (that is, in the widthwise direction); the primary resonance frequency and the loss factor are determined for each of the regions; and the absolute value of the difference between the maximum and minimum values is obtained for each of the found primary resonance frequencies and found loss factors. As the clear glass sheets for use in the mechanical impedance measurement, two clear float glass sheets having a thickness of 2.0 mm, a width of 25 mm, and a length of 300 mm are provided in accordance with JIS R3202.

The laminated glass for use in the measurement can be prepared in the following manner.

The interlayer film is sandwiched between two clear float glass sheets to obtain laminated body. The laminated body is placed in a rubber bag, followed by deaeration for 20 minutes at a degree of vacuum of 2.6 kPa. Then, the deaerated bag is transferred into an oven and further hold at 90°C for 30 minutes for vacuum press, to thereby carrying out preliminarily press-bonding of the laminated body. Thereafter, the laminated body after the preliminary press-bonding is subjected to press-bonding for 20 minutes in an autoclave under the conditions of 135°C and a pressure of 1.2 MPa, to thereby obtain a laminated glass. The laminated glass obtained is then left still in a room at 23°C and 30RH% for 8 weeks. The mechanical impedance measurement (MIM) can be carried out by the method as described in Examples.

The primary resonance frequency and loss factor obtained by the above measurement method are used as the primary resonance frequency and loss factor, respectively, of the interlayer film for laminated glass of the present invention.

### <Requirement (C)>

In still another aspect, the interlayer film of the present invention satisfies Requirement (C) below.

Requirement (C): when the interlayer film is trisected into regions from one end of the interlayer film to the other end, each of the regions has a loss factor (primary loss factor) as determined by mechanical impedance measurement (MIM) in accordance with ISO 16940:2008, and the absolute value of the difference between the maximum and minimum values of the loss factor (hereinafter also referred to as "ΔLF") is 0.1 or less.

If the interlayer film has a ΔLF larger than 0.1, the variation in the soundproof performance among regions may not be prevented to thereby fail to sufficiently enhance the soundproof performance of the interlayer film as a whole.

In view of enhancing the soundproof performance, the ΔLF is preferably 0.09 or less, more preferably 0.035 or less, even more preferably 0.025 or less, still more preferably 0.015 or less.

In view of the soundproof performance, a smaller ΔLF is more preferred. The ΔLF may be 0 or more, and in view of manufacturing with a practical manufacture efficiency in the production, the ΔLF is preferably more than 0, more preferably 0.001 or more, even more preferably 0.002 or more, still more preferably 0.003 or more.

The ΔLF can be reduced by decreasing the difference between the maximum and minimum values of the thickness ratio R(x) of the low-Tg resin layer to the interlayer film, and can be further reduced easily by additionally decreasing the standard deviation of the thickness ratio R(x), which will be described later.

In a case where Requirement (C) is satisfied, the loss factor may be in, for example, a range of 0.15 or more and 0.50 or less, and is preferably within a range of 0.2 or more and 0.45 or less, more preferably within a range of 0.24 or more and 0.40 or less. An interlayer film having a primary resonance frequency within a given range tends to deliver suitable soundproof performance. The primary resonance frequency being within a given range means that all of the primary resonance frequencies measured after trisection are within the given range.

The interlayer film of the present invention may satisfy any of Requirements (A), (B), and (C) described above, and preferably satisfies at least two requirements of Requirements (A), (B), and (C). Specifically, the interlayer film of the present invention preferably satisfies any requirement of both Requirements (A) and (B), both Requirements (A) and (C), or Requirements (C) and (A). In view of the soundproof performance, the interlayer film of the present invention more preferably satisfies all of Requirements (A), (B), and (C).

In a case where the interlayer film of the present invention satisfies at least one of Requirements (B) and (C), the interlayer film does not necessarily have two resin layers having glass transition temperatures different from each other, and the interlayer film may consist of a single resin layer or may have two or more resin layers having the same glass transition temperature. In that case, the single resin layer or the two or more resin layers are preferably made of the same material and have the same feature as of the resin layer used as the low-Tg resin layer, which will be described later.

### [Standard deviation]

In the present invention, the standard deviation of the deviation ΔR(x) of the thickness ratio R(x) with respect to f(x) is preferably 0.1% or more and 2% or less.

f(x) can be determined in the following manner.

First, the thickness ratio R(x) on the Y-axis is plotted against the coordinate x on the X-axis. Then, an approximate primary straight line f(x)=ax+b is determined by calculating from the plot of the thickness ratio R(x) and the coordinate x in a range of x=0.1X to 0.9X, wherein the straight line from one end of the interlayer film to the other end has a whole length of 1.0X. a and b are each a coefficient, and the unit of the coordinate x is mm. The approximate primary straight line is obtained by a least-squares method.

Here, the standard deviation represents the variation in the thickness ratio R(x). When the standard deviation is 2% or less, the variation in the thickness ratio R(x) is sufficiently small so that the soundproof performance tends to be enhanced even more. In view of the soundproof performance, the standard deviation is more preferably 1.5% or less, even more preferably 1.2% or less, still more preferably 1% or less.

When the standard deviation is 0.1% or more, suppression of the variation more than necessary is prevented to easily enhance the manufacturing efficiency. From such a point of view, the standard deviation is more preferably 0.2% or more, even more preferably 0.3% or more.

In view of the soundproof performance, etc., the absolute value of the value a in f(x) is preferably a given value or less, and for example, it may be 12 or less, and is preferably 8 or less, more preferably 5.5 or less, even more preferably 2.5 or less. The absolute value of the value a may be 0 or more. In view of the manufacturing efficiency, the absolute value of the value a may be a given value or more, and for example, may be 0.1 or more, or 0.2 or more.

### [Low-Tg resin layer and high-Tg resin layer]

In the present invention, the low-Tg resin layer is the resin layer having the lowest glass transition temperature among the two or more resin layers. The glass transition temperature of the low-Tg resin layer preferably is less than 15°C. When the glass transition temperature of the low-Tg resin layer is less than 15°C, the interlayer film tends to deliver even more enhanced soundproof performance. In view of enhancing the soundproof performance, the glass transition temperature of the low-Tg resin layer is preferably 10°C or less, more preferably 5°C or less, even more preferably 0°C or less. The glass transition temperature of the second resin layer is not particularly limited, and preferably -20°C or more, more preferably -12°C or more, in view of obtaining favorable mechanical properties of the interlayer film, such as the flexural rigidity.

In the present invention, the two or more resin layers included in the interlayer film includes a resin layer that has a glass transition temperature higher than that of the low-Tg resin layer described above (hereinafter, also referred to as "high-Tg resin layer").

The glass transition temperature of the high-Tg resin layer is preferably 15°C or more. When the interlayer film has a high-Tg resin layer having a glass transition temperature 15°C or more, the interlayer film tends to have great penetration resistance, ease to handle, mechanical strength, etc., and is thus suitably used as an interlayer film for laminated glass.

The glass transition temperature of the high-Tg resin layer is preferably 20°C or more, more preferably 25°C or more, and for example, 80°C or less, preferably 60°C or less, more preferably 50°C or less.

The glass transition temperature can be determined by peeling each layer from the interlayer film, preparing a measurement sample from each layer obtained, and measuring the viscoelasticity using a viscoelasticity measuring instrument by the following method.

The measurement sample is kept in an environment at a room temperature of 23±2°C and a humidity of 25±5% for 12 hours. Then, the viscoelasticity is measured using a viscoelasticity measuring instrument (e.g., viscoelasticity measuring instrument "ARES-G2" manufactured by TA Instruments.). The measurement is carried out using parallel plates with a diameter of 8 mm as the jig in share mode under the condition that the temperature is decreased from 100°C to -20°C at a temperature decrease rate of 3°C/min and also under the conditions of a frequency of 1 Hz and a distortion of 1%. The peak temperature of loss tangent in the measurement results obtained is used as the glass transition temperature Tg (°C).

Each resin layer (low-Tg resin layer and high-Tg resin layer) included in the interlayer film preferably has a refractive index of 1.46 or more, more preferably 1.465 or more, more preferably 1.47 or more. When the refractive index is 1.46 or more, it is possible to prevent the occurrence of a gap between the position of an object viewed through the laminated glass and the position of the actual position of the object. The refractive index is preferably such that the difference from the refractive index of the glass member for the laminated glass is small, and from such a point of view, the refractive index is preferably 1.55 or less, more preferably 1.53 or less.

The refractive index of the low-Tg resin layer and that of the high-Tg resin layer may be the same or different from each other, and particularly, the refractive index of the low-Tg resin layer is preferably lower than that of the high-Tg resin layer.

### [Layered structure of interlayer film]

The interlayer film may have the low-Tg resin layer and the high-Tg resin layer, as described above, and for example, may be an interlayer film having a two-layered structure composed of a single low-Tg resin layer and a single high-Tg resin layer. In this case, both of the high-Tg resin layer and the low-Tg resin layer preferably serves as the respective surface layers of the interlayer film. In laminated glass, each of the surface layers of the interlayer film serves as the adhering surface, on which the interlayer film adheres to a glass member for the laminated glass.

The interlayer film preferably includes either two or more low-Tg resin layers or two or more high-Tg resin layers, and preferably includes at least two or more high-Tg resin layers. A structure including two or more low-Tg resin layers is also preferable.

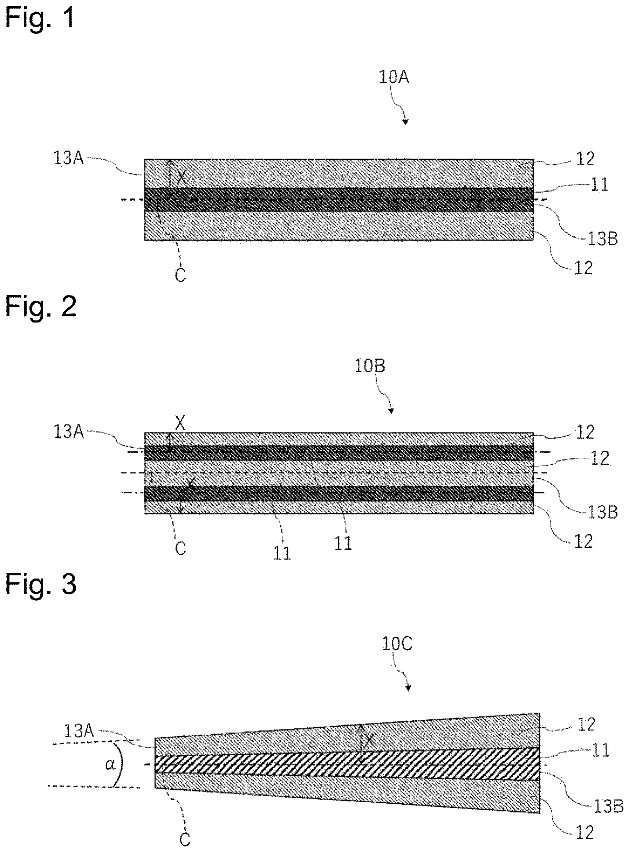

For example, the interlayer film is preferably an interlayer film 10A including two high-Tg resin layers 12, 12 and one low-Tg resin layer 11 provided between the pair of the high-Tg resin layers 12, 12, as shown in Fig. 1. In this case, each high-Tg resin layer 12, 12 preferably functions as the surface layer of the interlayer film to serve as the adhering surface to a glass member for the laminated glass, which will be described later.

Alternatively, the interlayer film is preferably an interlayer film 10B including three high-Tg resin layers 12 and two low-Tg resin layers 11, as shown in Fig. 2. In the interlayer film 10B, it is preferable that there should be provided a high-Tg resin layer 12, a low-Tg resin layer 11, another high-Tg resin layer 12, another low-Tg resin layer 11, and still another high-Tg resin layer 12 in this order, wherein the high-Tg resin layers 12, 12 serve as the surface layers of the interlayer film.

In the interlayer films 10A and 10B shown in Figs. 1 and 2, respectively, the high-Tg resin layers 12 serve as the surface layers of the interlayer film so that the interlayer film can appropriately adhere to the glass members of the laminated glass.

The layered structure of the interlayer film is not limited to those described above, and the interlayer film may have a layered structure different from the above. For example, in Fig. 1 and 2, yet another high-Tg resin layer 12 or low-Tg resin layer 11 may be further provided between any pair of the adjacent high-Tg resin layer 12 and low-Tg resin layer 11. For example, in the configuration in Fig. 2, yet another high-Tg resin layer may be further provided between at least either pair of the adjacent high-Tg resin layer 12 and low-Tg resin layer 11.

Although Figs. 1 and 2 each show an embodiment of an interlayer film that has a substantially uniform whole thickness from one end 13 A of the interlayer film to the other end 13B (hereinafter, also referred to as a "uniform film"), the above descriptions for the layered structure also apply to cases where the interlayer film is not a uniform film, such as a case where the interlayer film is a wedge-shaped interlayer film, which will be described later.

In one embodiment, the interlayer film of the present invention is preferably an interlayer film having a substantially uniform thickness (uniform film). The phrase "having a substantially uniform thickness" as used herein intends to encompass cases where the thickness varies to such a level as variation in production. Specifically, it means that this phrase can encompass cases where the ratio of the minimum thickness to the maximum thickness (min/max) is approximately 0.93 to 1.00. The ratio of the minimum thickness to the maximum thickness is preferably 0.95 or more and 1.00 or less, preferably 0.97 or more and 1.00 or less, more preferably 0.98 or more and 1.00 or less.

The interlayer film of the present invention may be an interlayer film having an ununiform thickness, and for example, may be an interlayer film in which the thickness at one end thereof and the thickness at the other end are different from each other. In such an interlayer film in which the thickness at one end thereof and the thickness at the other end are different from each other, the ratio of the smaller thickness to the larger thickness, of the thickness at one end and that at the other, is preferably 0.1 or more and 0.93 or less, more preferably 0.2 or more and 0.9 or less, even more preferably 0.4 or more and 0.85 or less.

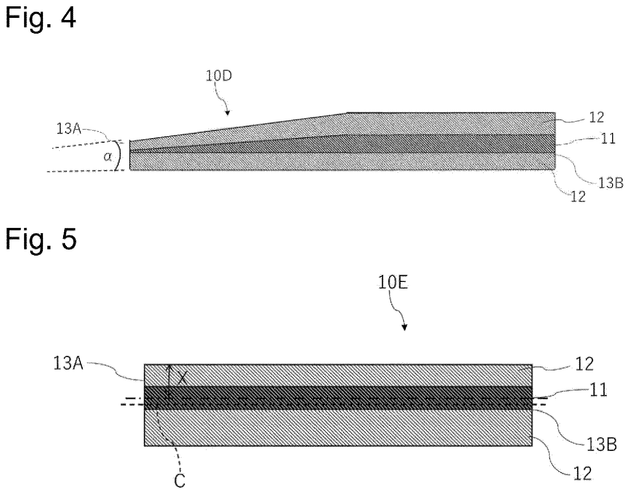

The interlayer film in which the thickness at one end thereof and the thickness at the other end are different from each other is preferably a wedge-shaped interlayer film that has a wedge-shaped portion having a thickness varying from the one end 13A side of the interlayer film to the other end 13B side in a cross section, as shown in Figs. 3 and 4.

### [Wedge-shaped interlayer film]

In the wedge-shaped interlayer film, the wedge angle α of the wedge-shaped portion is preferably 0.1 mrad or more. That is, the wedge-shaped interlayer film preferably includes a wedge-shaped portion having a wedge angle α of 0.1 mrad or more in a cross section. The cross section here is a cross section parallel to the thickness direction and the widthwise direction.

The interlayer film that includes a wedge-shaped portion having a wedge angle α of 0.1 mrad or more in the cross section may be applied to head-up displays (HUDs) as described later, and in that case, HUD images can be displayed in the wedge-shaped portion in the cross section to thereby easily reduce double images due to reflection, which are generated when HUD images are displayed. In view of reducing the double images due to reflection, the wedge angle α is more preferably 0.12 mrad or more, even more preferably 0.3 mrad or more, still more preferably 0.4 mrad or more. In view of suppressing double images due to transmission formed by light transmitted through the laminated glass, the wedge angle α is preferably a given value or less. For example, it may be 1.2 mrad or less, and is preferably 1.0 mrad or less, more preferably 0.8 mrad or less, even more preferably 0.6 mrad or less. However, the best wedge angle α depends on the installing angle of a windshield and the height of viewpoint of an observer, for example, and accordingly, the wedge angle α can be adjusted appropriately according to conditions for each case.

The wedge-shaped interlayer film may include a wedge-shaped portion having a wedge angle of 0.1 mrad or more in a cross section over the whole range from one end 13A to the other end 13B, as with an interlayer film 10C in Fig. 3, or may include a wedge-shaped portion having a wedge angle of 0.1 mrad or more in a cross section over a part of the range from one end 13A to the other end 13B, as with an interlayer film 10D in Fig. 4.

In a case where the wedge-shaped interlayer film that include a wedge-shaped portion having a wedge angle of 0.1 mrad or more in a part in a cross section is applied to head-up displays (HUDs) described later, the portion corresponding to the area where HUD images are displayed is preferably at least the wedge-shaped portion having a wedge angle of 0.1 mrad or more in a cross section.

In a case where a part of the range from one end 13A to the other end 13B is the wedge-shaped portion having a wedge angle of 0.1 mrad or more in a cross section, the other part may have a wedge angle α less than 0.1 mrad, and is preferably a portion having a substantially uniform thickness. The other part may at least partly include a wedge-shaped portion having a wedge angle α of a negative value in a cross section. A wedge angle α of a negative value means having a wedge angle such that the thickness decreases from one end 13A to the other end 13B.

In a case where a part of the range from one end 13A to the other end 13B is the wedge-shaped portion having a wedge angle of 0.1 mrad or more, the percentage of the wedge-shaped portion having a wedge angle of 0.1 mrad or more may be, for example, 5% or more and less than 100%, and is preferably 10% or more and less than 100%, more preferably 20% or more and less than 100%, even more preferably 30% or more and less than 100%, still more preferably 50% or more and less than 100%, based on the whole of the range from one end to the other end.

In the wedge-shaped interlayer film, the wedge-shaped portion having a wedge angle of 0.1 mrad or more in a cross section may include, in at least any part thereof, a portion at which the wedge angle changes. The wedge angle preferably changes within a range of the above-described lower limit or more and the above-described upper limit or less.

In a case where the wedge angle changes, the wedge angle α preferably changes so that the difference between the maximum value and the minimum value of the wedge angle α can be substantially found. Specifically, the difference between the maximum value and the minimum value of the wedge angle α may be 0.05 mrad or more and 1.5 mrad or less, preferably 0.1 mrad or more and 1.2 mrad or less, more preferably 0.2 mrad or more and 1 mrad or less.

For example, the position of a driver's eye height may change, and even in such a case, the best wedge angle for suppressing double images due to reflection can be selected for each position, when the wedge-shaped interlayer film includes a portion at which the wedge angle substantially changes. In addition, when the wedge-shaped interlayer film includes a portion at which the wedge angle substantially changes, double images due to reflection can be efficiently suppressed in HUDs that display two or more images having different focal distances, such as dual HUDS.

The wedge angle may change by only an extent of variation in production. In such a case, it can be said that the wedge angle is substantially constant, and the wedge angle may change within a range less than the above-described lower limit, for example.

The wedge angle α herein is a wedge angle as measured by the following method.

The data of the thicknesses at 1-mm intervals in the widthwise direction is obtained using a thickness measurement gauge. Then, the data of the thicknesses is on the vertical axis (Y-axis), and the coordinate of the position along the widthwise direction is on the transverse axis (X-axis), wherein the coordinate at one end 13A is 0. In the region extending between the 41st point from one end 13A toward the other end 13B and the 41st point from the other end 13B toward one end 13A, an approximate primary straight line is calculated by the least squares method for a width of 80 mm (81 points) with each point as the center. The angle between the approximate primary straight line and the straight line y=0 is used as the wedge angle at the point. As the thickness measurement gauge, the example mentioned above can be used.

As described above, the thickness of the wedge-shaped interlayer film preferably increases from one end 13A toward the other end 13B. As shown in the interlayer films 10C, 10D in Figs. 3 and 4, the thickness of the low-Tg resin layer 11 also preferably increases from one end 13A toward the other end 13B according to the change in the thickness of the interlayer film. In a case where the thickness of the low-Tg resin layer 11 thus also changes from one end 13A toward the other end 13B according to the change in the thickness of the wedge-shaped interlayer film, the value of ΔR(x) and also the standard deviation can be small even when the interlayer film is a wedge-shaped interlayer film.

### [Position of low-Tg resin layer in thickness direction]

In the interlayer film, the low-Tg resin layer 11 is preferably present at the center C in the thickness direction of the interlayer film, as shown in Fig. 1, for example. When the low-Tg resin layer 11 is present at the center in the thickness direction, the interlayer film 10A of tri-layered structure as shown in Fig. 1, for example, can be a symmetric shape about the low-Tg resin layer 11, which results in good manufacturing efficiency. In addition, the thicknesses of the high-Tg resin layers 12, which are the resin layers present on both sides, can be maximized, whereby optical distortion is eased advantageously. The optical distortion here means that when a view is seen through a laminated glass including the interlayer film, the view is distorted. In a case where a plurality of low-Tg resin layers are included, any one of the low-Tg resin layers may preferably be present at the center in the thickness direction.

Alternatively, in the interlayer film, the low-Tg resin layer 11 may be arranged so as to be off-center in the thickness direction toward either one of main surface side. By arranging the low-Tg resin layer 11 so as to be off-center, the soundproof performance can be advantageously adjusted.

In a case where the interlayer film has a single low-Tg resin layer 11, the expression "the low-Tg resin layer 11 is arranged so as to be off-center" means that the center of the low-Tg resin layer 11 is off-center C in the thickness direction, as shown in Fig. 5. In a case where a plurality of low-Tg resin layers are included, the expression means that all of the low-Tg resin layers are off-center C, as shown in Fig. 2, for example.

Herein, whether the low-Tg resin layer is present at the center C in the thickness direction or arranged so as to be off-center toward either one of main surface side can be determined on the basis of the proportion (%) of the distance X from one main surface of the interlayer film to the center of the low-Tg resin layer in the thickness direction, wherein the thickness of the entire interlayer film is regarded as 100%. When the distance X is 50%, it can be determined that the low-Tg resin layer is present at the center in the thickness direction, and when the distance X is 49% or less, it can be determined that the low-Tg resin layer is arranged so as to be off-center toward in the thickness direction either one of main surface side.

The distance X can be calculated by adding the sum of the average thicknesses of all layers present on one main surface side relative to a given low-Tg resin layer to 50% of the average thickness of the given low-Tg resin layer and determining the proportion (%) of the resulting value to the average thickness of the entire interlayer film. The proportion (%) may be determined as an integer value by rounding off. **In** a case where the distances from the low-Tg resin layer in question to the respective main surface sides are different from each other, the closer main surface side, of both sides, may be taken as the above-described "one main surface side" so that the proportion (%) is not more than 50%.

The distance X also serves as a measure of an extent of a gap from the center position. The smaller than 50%, the larger the gap. In a case where the low-Tg resin layer is off-center in the thickness direction, the distance X may be for example, but not limited to, 5% or more and 49% or less, and is preferably 10% or more and 40% or less. A distance X equal to or more than the above-described lower limit can prevent providing the low-Tg resin layer near the surface layer of the interlayer film. When the distance X is 40% or less, the effect obtained by arranging the low-Tg resin layer so as to be off-center tends to be easily exhibited. **In** a case where two or more low-Tg resin layers are included, the distances X of all low-Tg resin layers may fall within the above-described range, or at least the distance X of one low-Tg resin layer may fall within the above-described range. In other words, one low-Tg resin layer may be present at the center position in the thickness direction, whereas the other low-Tg resin layer(s) is (are) arranged so as to be off-center by the distance X in the thickness direction.

### [Material for interlayer film]

As described above, the interlayer film is composed of a plurality of resin layers. The resin forming each resin layer is preferably a thermoplastic resin. When a thermoplastic resin is used for each resin layer of the interlayer film, glass members for laminated glass can be more easily adhered to each other via the interlayer film by thermal press-bonding.

Examples of the thermoplastic resin used for the interlayer film include (meth)acrylic resin, polyvinyl acetal resin, polyvinyl alcohol resin (PVA), polyurethane resin (PU), ethylene/vinyl acetate copolymer resin (EVA), saponification product of ethylene/vinyl acetate copolymer (EVOH), ethylene/methacrylic acid copolymer resin, ionomer resin, isobutylene resin, styrene/isoprene copolymer resin, and styrene/butadiene copolymer resin.

In view of adjusting the glass transition temperature to easily deliver the soundproof performance, ethylene/vinyl acetate copolymer resin, polyvinyl acetal resin, and (meth)acrylic resin are preferred as the thermoplastic resin among the above. Ethylene/vinyl acetate copolymer resin and polyvinyl acetal resin are more preferred, and among others, polyvinyl acetal resin is even more preferred. Use of polyvinyl acetal resin tends to result in great impact resistance of the laminated glass and also tends to result in favorable adhesiveness to the glass member for the laminated glass.

In each resin layer, the thermoplastic resins may be used singly or in combinations of two or more thereof. In a case where a plurality of resin layers are included, the respective thermoplastic resins used for the resin layers may be the same kind or different kinds; however, the same kind of resin is preferably used.

Accordingly, all of the resins used for the low-Tg resin layer and the high-Tg resin layer in the interlayer film are each preferably ethylene/vinyl acetate copolymer resin, polyvinyl acetal resin, or (meth)acrylic resin; more preferably polyvinyl acetal resin or ethylene/vinyl acetate copolymer resin; even more preferably polyvinyl acetal resin.

### (Polyvinyl acetal resin)

The polyvinyl acetal resin used for each resin layer will be now described in detail. In the descriptions below, features common to the polyvinyl acetal resins that are used for any resin layers will be described simply as those of "the polyvinyl acetal resin." Features characteristic to the polyvinyl acetal resin that is used for the low-Tg resin layer will be described as those of "polyvinyl acetal resin (1)," and features characteristic to the polyvinyl acetal resin that is used for the high-Tg resin layer will be described as those of "polyvinyl acetal resin (2)."

Similarly, a thermoplastic resin that is used for the low-Tg resin layer may be referred to as "thermoplastic resin (1)," and a thermoplastic resin that is used for the high-Tg resin layer may be referred to as "thermoplastic resin (2)."

The polyvinyl acetal resin is not particularly limited as long as it is a polyvinyl acetal resin obtained by acetalization of a polyvinyl alcohol with an aldehyde. In the descriptions below, a polyvinyl alcohol for obtaining a polyvinyl acetal resin may also be referred to as a PVA, and a PVA for obtaining a polyvinyl acetal resin (1) and that for a polyvinyl acetal resin (2) may also be referred to as a PVA (1) and a PVA (2), respectively.

The average polymerization degree of the PVA is preferably 200 or more, more preferably 500 or more, even more preferably 1000 or more, still more preferably 1500 or more. When the average polymerization degree is equal to or more than the above-described lower limit, the laminated glass has great penetration resistance. The average polymerization degree of the PVA is preferably 5000 or less, more preferably 4000 or less, even more preferably 3500 or less. When the average polymerization degree is equal to or less than the above-described upper limit, it is easy to form the interlayer film.

PVA (1) preferably has a high average polymerization degree, and PVA (2) preferably has a low average polymerization degree. Thus, the average polymerization degree of PVA (1) is preferably higher than that of PVA (2), and at that time, the difference between the average polymerization degrees of PVAs (1) and (2) is, for example 100 or more and 1800 or less, preferably 200 or more and 1600 or less, more preferably 400 or more and 1500 or less.

It is also preferable that the average polymerization degree of PVA (1) should be 2000 or more, and it is more preferable that it should be 2100 or more. On the other hand, it is also preferable that the average polymerization degree of PVA (2) should be 2500 or less, and it is more preferable that it should be 1900 or less.

The average polymerization degree of the polyvinyl alcohol can be determined by a method in accordance with JIS K 6726 "Testing methods for polyvinyl alcohol."

The above-described aldehyde is not particularly limited, and it is generally preferable to use an aldehyde having 1 to 10 carbon atoms. The aldehyde having 1 to 10 carbon atoms is not particularly limited, and examples thereof include n-butyraldehyde, isobutyraldehyde, n- valeraldehyde, 2-ethylbutyraldehyde, n-hexylaldehyde, n-octylaldehyde, n-nonylaldehyde, n-decylaldehyde, formaldehyde, acetaldehyde, and benzaldehyde. These aldehydes may be used singly or in combinations of two or more thereof.

The number of carbon atoms of the acetal group included in the polyvinyl acetal resin is not particularly limited, and is preferably 1 to 10, more preferably 3 to 5, even more preferably 4 or 5, particularly preferably 4. Specifically, n-butyraldehyde, n-hexylaldehyde, and n- valeraldehyde are preferable as the aldehyde, among those listed above, and n-butyraldehyde is more preferable. Accordingly, the polyvinyl acetal resin is preferably polyvinyl butyral resin, and it is preferable that polyvinyl acetal resins (1) and (2) each should be polyvinyl butyral resin.

The polyvinyl acetal resin generally has an acetal group, a hydroxyl group, and an acetyl group in its side chain. The content of the hydroxyl group (amount of the hydroxyl group) in the polyvinyl acetal resin is, for example, 17 mol% or more and 38 mol% or less, preferably 20 mol% or more and 36 mol% or less.

The acetalization degree of the polyvinyl acetal resin is for example, 42 mol% or more and 85 mol% or less, preferably 55 mol% or more and 80 mol% or less.

The acetalization degree (amount of the acetyl group) of the polyvinyl acetal resin is for example, 0.01 mol% or more and 30 mol% or less, preferably 0.1 mol% or more and 25 mol% or less.

In more detail, the content of the hydroxyl group (amount of the hydroxyl group) in polyvinyl acetal resin (1) used for the low-Tg resin layer is preferably 17 mol% or more, more preferably 20 mol% or more, and for example, 38 mol% or less, preferably 34 mol% or less. When the content of the hydroxyl group is equal to or more than the above-described lower limit, the interlayer film has more enhanced adhesiveness. In view of absorbing a plasticizer by polyvinyl acetal resin (1) to thereby enhance the soundproof performance of the laminated glass, the content of the hydroxyl group is more preferably 30 mol% or less, even more preferably 27 mol% or less. When the content of the hydroxyl group in polyvinyl acetal resin (1) is 20 mol% or more, the reaction efficiency is enhanced to result in excellent productivity.

Each content of the hydroxyl group in polyvinyl acetal resin used for the high-Tg resin layer (polyvinyl acetal resin (2)) is, for example, 20% or more, preferably 25 mol% or more, more preferably 28 mol% or more. When the content of the hydroxyl group is equal to or more than the above-described lower limit, the interlayer film has more enhanced flexural rigidity while maintaining the soundproof performance. Each content of the hydroxyl group in polyvinyl acetal resin (2) is preferably 38 mol% or less, more preferably 36 mol% or less, even more preferably 34 mol% or less. When the content of the hydroxyl group is equal to or less than the above-described lower limit, the polyvinyl acetal resin is easily settled down during synthesis thereof.

In view of further enhancing the soundproof performance, the content of the hydroxyl group in polyvinyl acetal resin (1) is preferably smaller than the content of the hydroxyl group in polyvinyl acetal resin (2).

When the content of the hydroxyl group in polyvinyl acetal resin (1) is smaller than the content of the hydroxyl group in polyvinyl acetal resin (2), the absolute value of the difference between these contents is, for example, 0.5 mol% or more, preferably 1 mol% or more, whereby the soundproof performance can be further enhanced. From such a point of view, the absolute value of the difference between the contents of the hydroxyl group is more preferably 3 mol% or more, even more preferably 5% or more. The absolute value of the difference between the contents of the hydroxyl group is preferably 20 mol% or less, more preferably 10 mol% or less.

The content of the hydroxyl group in the polyvinyl acetal resin is a value, in percentage terms, of the molar fraction obtained by dividing the amount of the ethylene group with a hydroxyl group bonded thereto by the whole amount of the ethylene group in the main chain. The amount of the ethylene group with a hydroxyl group bonded thereto can be determined, for example, in accordance with JIS K 6726 "Testing methods for polyvinyl butyral. "

The acetalization degree of polyvinyl acetal resin (1) used for the low-Tg resin layer is preferably 47 mol% or more, more preferably 55 mol% or more, still more preferably 60 mol% or more and preferably 85 mol% or less, more preferably 80 mol% or less, even more preferably 75 mol% or less. When the acetalization degree is equal to or more than the above-described lower limit, polyvinyl acetal resin (1) has higher compatibility with a plasticizer. When the acetalization degree of polyvinyl acetal resin (1) is equal to or less than the above-described upper limit, the resin has a reduced amount of residual aldehyde. In a case where the acetal group is a butyral group, or in other words, in a case where polyvinyl acetal resin (1) is polyvinyl butyral resin, the acetalization degree means a butyralization degree.

The acetalization degree of polyvinyl acetal resin (2) used for the high-Tg resin layer (the butyralization degree in a case of polyvinyl butyral resin) is, for example, 42 mol% or more, preferably 55 mol% or more, more preferably 60 mol% or more, even more preferably 63 mol% or more, and preferably 85 mol% or less, more preferably 80 mol% or less, even more preferably 75 mol% or less. When the acetalization degree is equal to or more than the above-described lower limit, the polyvinyl acetal resin has higher compatibility with a plasticizer. When the acetalization degree is equal to or less than the above-described upper limit, the resin has a reduced amount of residual aldehyde.

The acetalization degree is a value, in percentage terms, of the molar fraction obtained by the following manner: from the whole amount of the ethylene group in the main chain, the amount of the ethylene group with a hydroxyl group bonded thereto and the amount of the ethylene group with an acetyl group bonded thereto are subtracted, and the resulting value is divided by the whole amount of the ethylene group in the main chain, to obtain the molar fraction. The acetalization degree (the butyralization degree) may be calculated from results determined by a method in accordance with JIS K 6728 "Testing methods for polyvinyl butyral. "

The acetylation degree (amount of the acetyl group) of polyvinyl acetal resin (1) used for the low-Tg resin layer is preferably 0.01 mol% or more, more preferably 0.1 mol% or more. In view of enhancing the compatibility of the polyvinyl acetal resin with a plasticizer to easily blend with a large amount of the plasticizer, the acetylation degree is more preferably 7 mol% or more, particularly preferably 9 mol% or more. The acetylation degree of polyvinyl acetal resin (1) is preferably 30 mol% or less, more preferably 25 mol% or less, even more preferably 24 mol% or less, still more preferably 20 mol% or less. When the acetylation degree is equal to or less than the above-described upper limit, the interlayer film and the laminated glass have enhanced resistance to humidity.

The acetylation degree of polyvinyl acetal resin (2) used for the high-Tg resin layer is preferably 15 mol% or less, more preferably 10 mol% or less, even more preferably 2 mol% or less. When the acetylation degree is equal to or less than the above-described upper limit, the interlayer film and the laminated glass have enhanced resistance to humidity. The acetylation degree of polyvinyl acetal resin (2) is preferably 0.01 mol% or more, more preferably 0.1 mol% or more, but not particularly limited thereto.

The acetylation degree is a value, in percentage terms, of the molar fraction obtained by dividing the amount of the ethylene group with an acetyl group bonded thereto by the whole amount of the ethylene group in the main chain. The amount of the ethylene group with an acetyl group bonded thereto can be determined, for example, in accordance with JIS K 6728 "Testing methods for polyvinyl butyral."

Typically, the polyvinyl acetal resin is preferably non-modified polyvinyl acetal resin, but may be modified polyvinyl acetal resin.

The modified polyvinyl acetal resin has a structure (modifying group) different from the acetal group, the hydroxyl group and the acetyl group, and preferably has the modifying group in its side chain. Examples thereof include those having a polyalkylene oxide structure as the modifying group in its side chain, and those having an alkyl group (having about 2 to 30 carbon atoms, for example) different from the acetal group and the acetyl group, as the modifying group, in its side chain.

### (Etylene/vinyl acetate copolymer resin)

The ethylene/vinyl acetate copolymer resin used for each resin layer may be non-crosslinkable ethylene/vinyl acetate copolymer resin or may be high temperature-crosslinkable ethylene/vinyl acetate copolymer resin. As the ethylene/vinyl acetate copolymer resin, modified products of ethylene/vinyl acetate resin can be also used, such as a saponification product of ethylene/vinyl acetate copolymer and a hydrolysate of ethylenevinyl acetate.

The ethylene/vinyl acetate copolymer resin preferably has a vinyl acetate content of 10 mass% or more and 50 mass% or less, as measured in accordance with JIS K 6730 "Testing methods for ethylene/vinyl acetate copolymer materials." When the vinyl acetate content is equal to or more than the lower limit, adhesiveness to a glass sheet, etc. is favorable, and in addition, the resulting laminated glass tends to have greater penetration resistance. When the vinyl acetate content is equal to or less than the upper limit, the interlayer film has a large rupture strength, and the laminated glass has favorable impact resistance.

The glass transition temperature of the resin layer including the ethylene/vinyl acetate copolymer resin can be adjusted by, for example, the vinyl acetate content.

### (Plasticizer)

Each resin layer may further include a plasticizer, in a case where the resin used therefor is a thermoplastic resin. When the plasticizer is included in the resin layer, the interlayer film is flexible, and as a result, the laminated glass is also flexible. **In** addition, the interlayer film can have enhanced adhesiveness to a glass member for the laminated glass, in a case where the glass member for the laminated glass is inorganic glass. **In** a case where the polyvinyl acetal resin is used as a thermoplastic resin, it is particularly effective that the plasticizer is included in the resin layer including the thermoplastic resin. Accordingly, the low-Tg resin layer preferably include the plasticizer in addition to the polyvinyl acetal resin. The high-Tg resin layer also preferably includes the plasticizer in addition to the polyvinyl acetal resin.

Details of the plasticizers used for the respective resin layer will be described below. In the descriptions below, the plasticizer used for any resin layers will be described together. A plasticizer used for the low-Tg resin layer may be also referred to as plasticizer (1), and a plasticizer used for the high-Tg resin layer may be also referred to as plasticizer (2).

Examples of the plasticizer used for any resin layers include an organic ester plasticizer such as a monobasic organic acid ester and a polybasic organic acid ester, and a phosphoric acid plasticizer such as an organophosphorus plasticizer and an organophosphite plasticizer. Among these, the organic ester plasticizer is preferable. The plasticizer is preferably a liquid plasticizer. The liquid plasticizer is a plasticizer that is in liquid state at normal temperature (23°C) and normal pressure (1 atom).

Examples of the monobasic organic acid ester include an ester between a glycol and a monobasic organic acid. Examples of the glycol include a polyalkylene glycol in which the number of repeating alkylene units is 2 to 10, preferably 2 to 4, each alkylene unit having 2 to 4 carbon atoms, preferably 2 or 3 carbon atoms. The glycol may be a monoalkylene glycol having 2 to 4 carbon atoms, preferably 2 or 3 carbon atoms, in which the number of repeating alkylene units is one.

Specific examples of the glycol include ethylene glycol, diethylene glycol, triethylene glycol, tetraethylene glycol, propylene glycol, dipropylene glycol, tripropylene glycol, tetrapropylene glycol, and butylene glycol.

Examples of the monobasic organic acid include an organic acid having 3 to 10 carbon atoms, and specific examples thereof include butyric acid, isobutyric acid, caproic acid, 2-ethylbutyric acid, 2-ethylpentanoic acid, heptyl acid, n-octyl acid, 2-ethylhexanoic acid, n-nonyl acid, and decyl acid.

Preferable examples of the monobasic organic acid ester include a compound represented by formula (1) below.

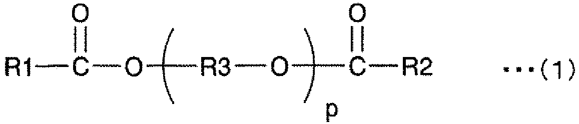

In formula (1), R1 and R2 each represent an organic group having 2 to 10 carbon atoms, R3 represents an ethylene group, an isopropylene group, or a n-propylene group, and p represents an integer of 3 to 10. R1 and R2 in formula (1) each preferably have 5 to 10 carbon atoms, more preferably 6 to 10 carbon atoms. The organic groups represented by R1 and R2 are each preferably a hydrocarbon group, more preferably an alkyl group.

Specific examples of the glycol ester include ethylene glycol di-2-ethylbutyrate, 1,2-propylene glycol di-2-ethylbutyrate, 1,3-propylene glycol di-2-ethylbutyrate, 1,4-butylene glycol di-2-ethylbutyrate, 1,2-butylene glycol di-2-ethylbutyrate, diethylene glycol di-2-ethylbutyrate, diethylene glycol dicapryate, diethylene glycol di-2-ethylhexanoate, dipropylene glycol di-2-ethylbutyrate, triethylene glycol di-2-ethylhexanoate, triethylene glycol dicaprylate, triethylene glycol di-2-ethylpentanoate, triethylene glycol di-n-heptanoate, triethylene glycol di-2-ethylbutyrate, triethylene glycol di-2-ethylpropanoate, tetraethylene glycol di-n-heptanoate, tetraethylene glycol di-2-ethylhexanoate, and tetraethylene glycol di-2-ethylbutyrate.

Examples of the polybasic organic acid ester include an ester compound between a dibasic organic acid having 4 to 12 carbon atoms, such as adipic acid, sebacic acid, and azelaic acid, and an alcohol having 4 to 10 carbon atoms. The alcohol having 4 to 10 carbon atoms may be linear or have a branched structure or a cyclic structure.

Specific examples include dibutyl sebacate, dioctyl azelate, dihexyl adipate, dioctyl adipate, hexyl cyclohexyl adipate, diisononyl adipate, heptylnonyl adipate, di-(2-butoxyethyl) adipate, dibutylcarbitol adipate, and mixed adipate ester. Oil-modified sebacic alkyd may also be used. Examples of the mixed adipate ester include adipate ester prepared by using two or more alcohols selected from the group consisting of alkyl alcohols having 4 to 9 carbon atoms and cyclic alcohols having 4 to 9 carbon atoms.

Examples of the organophosphorus plasticizer include a phosphate ester, such as tributoxyethyl phosphate, isodecylphenyl phosphate, and triisopropyl phosphate.

The plasticizers may be used singly or in combinations of two or more thereof.

Among those described above, the plasticizer is preferably selected from the group consisting of di-(2-butoxyethyl) adipate (DBEA), triethylene glycol di-2-ethylhexanoate (3GO), triethylene glycol di-2-ethylbutyrate (3GH), and triethylene glycol di-2-ethylpropanoate, more preferably selected from the group consisting of triethylene glycol di-2-ethylhexanoate (3GO), triethylene glycol di-2-ethylbutyrate (3GH), and triethylene glycol di-2-ethylpropanoate, even more preferably selected from the group consisting of triethylene glycol di-2-ethylhexanoate and triethylene glycol di-2-ethylbutyrate, and the plasticizer is particularly preferably triethylene glycol di-2-ethylhexanoate.

The content of the plasticizer in each resin layer is not particularly limited, and is for example, 10 parts by mass or more and 100 parts by mass or less, preferably 15 parts by mass or more and 90 parts by mass or less, per 100 parts by mass of the thermoplastic resin.

In more detail, the content of plasticizer (1) in the low-Tg resin layer (hereinafter also referred to as content (1)) is preferably 20 parts by mass or more, more preferably 30 parts by mass or more, still more preferably 40 parts by mass or more, per 100 parts by mass of thermoplastic resin (1). When content (1) is equal to or more than the above-described lower limit, the interlayer film has enhanced flexibility so that the interlayer film is easy to handle, and also the soundproof performance is easily enhanced. In view of the soundproof performance, content (1) is preferably higher. From such points of view, content (1) is even more preferably 50 parts by mass or more, particularly preferably 55 parts by mass or more.

Content (1) of plasticizer (1) is preferably 100 parts by mass or less, more preferably 90 parts by mass or less, even more preferably 85 parts by mass or less, particularly preferably 80 parts by mass or less, still more preferably 75 parts by mass or less. When content (1) is equal to or less than the above-described upper limit, the laminated glass has greater penetration resistance.

The content of plasticizer in the high-Tg resin layer (hereinafter also referred to as "content (2)") is preferably 10 parts by mass or more per 100 parts by mass of thermoplastic resin (2). When the content of the plasticizer is equal to or more than the above-described lower limit, the interlayer film has enhanced flexibility so that the interlayer film is easy to handle. From such points of view, content (2) of the plasticizer is preferably 15 parts by mass or more, more preferably 20 parts by mass or more, particularly preferably 24 parts by mass or more.

Content (2) is preferably 60 parts by mass or less, more preferably 55 parts by mass or less, even more preferably 50 parts by mass or less. When each of these contents is equal to or less than the above-described upper limit, the interlayer film has favorable mechanical properties such as flexural rigidity.

In view of enhancing the soundproof performance of the laminated glass, content (1) of the plasticizer in the low-Tg resin layer is preferably the same or larger than content (2) of the plasticizer in the high-Tg resin layer, and is more preferably larger than content (2) of the plasticizer in the high-Tg resin layer.

In a case where content (1) is larger than content (2), the absolute value of the difference between them is preferably 5 parts by mass or more, more preferably 10 parts by mass or more, even more preferably 15 parts by mass or more. When the absolute value of the difference between the contents is larger in such a manner, the laminated glass tends to have highly enhanced soundproof performance. The absolute value of the difference is preferably 70 parts by mass or less, more preferably 60 parts by mass or less, even more preferably 50 parts by mass or less, still more preferably 40 parts by mass or less.

Each of the resin layers (the low-Tg resin layer and the high-Tg resin layer) preferably include the thermoplastic resin, or the thermoplastic resin plus the plasticizer, as its main component(s). The total amount of the thermoplastic resin and the plasticizer is preferably 70 mass% or more to 100 mass% or less, more preferably 80 mass% or more to 100 mass% or less, even preferably 90 mass% or more to 100 mass% or less, based on the whole mass of each resin layer.

### (Colorant)

Each resin layer included in the interlayer film may include a colorant. A resin layer including a colorant may also referred to as a colorant layer in the descriptions below. The colorant may be dispersed uniformly in the colorant layer. The colorant is preferably included in at least one of the resin layers included in the interlayer film. The colorant may be included in any low-Tg resin layer and may be included in any high-Tg resin layer, and is preferably included in at least one high-Tg resin layer.

For example, in the layered structures shown in Figs. 1 and 3 to 5, the colorant may be included in the low-Tg resin layer 11. The colorant may be included in at least one of the high-Tg resin layers 12, 12, and in this case, it is also preferable that the colorant should be included in both the high-Tg resin layers 12, 12.

For example, in the layered structure shown in Fig. 2, the colorant may be included in either one of the low-Tg resin layers 11, 11, or may be included in both. The colorant may be included in at least one of the high-Tg resin layers 12, 12, 12 and the colorant may be included in all the high-Tg resin layers 12, 12, 12.

The interlayer film may include the colorant over its whole area, or may include the colorant in a part of its area. In other words, the colorant layer including the colorant may be provided over the whole area of the interlayer film, as shown in Figs. 1 to 5, or may be provided in a part of the area of the interlayer film (not shown).

In a case where the colorant layer is provided in a part of the area of the interlayer film, the colorant layer is preferably the high-Tg resin layer. Making the colorant layer provided in a part of the area of the interlayer film as the high-Tg resin layer tends to result in that a difference between the maximum value and the minimum value of the thickness ratio of the low-Tg resin layer, ΔR(x), is equal to or less than the predetermined value.

In a case where the colorant layer is provided in a part of the area of the interlayer film, it is preferable in, for example, the layered structures shown in Figs. 1 to 5 that at least a part of the high-Tg resin layer 12 should have a multilayered structure at least one layer of which is a colorant layer.

The colorant used is not particularly limited, and coloring matters conventionally used for interlayer films can be used. Blue, yellow, red, green, purple, white, black, and other coloring matters can be used. As the coloring matter, pigments and dyes can be used, for example. The interlayer film can be colored a desired color by using the colorant, to thereby enhance the design of the interlayer film.

Examples of the pigment used for the interlayer film include carbon black, copper phthalocyanine pigments such as pigment blue, phthalocyanine pigments such as cobalt phthalocyanine pigment, anthraquinone pigments, perylene pigments, diketopyrrolopyrrole pigments, quinacridone pigments, perrinone pigments, thioindigo pigments, isoindoline pigments, isoindolinone pigments, quinophthalone pigments, thulene pigments, dioxazine pigments, pyrocholine pigments, fluorubin pigments, azo pigments, titanium dioxide pigments, calcium carbonate pigments, metal oxide pigments, Ni complex pigments, and other metal complex pigments.

Examples of the dyes include azo dyes, cyanine dyes, triphenylmethane dyes, phthalocyanine dyes, anthraquinone dyes, naphthoquinone dyes, quinoneimine dyes, methine dyes, azomethine dyes, squarylium dyes, acridine dyes, styryl dyes, coumarin dyes, quinoline dyes, and nitro dyes. The dye may be a dispersed dye.

The above-described pigments and dyes serving as the colorant may be directly blended into a resin, or may be made into a form of an ink or toner before blended into a resin.

Alternatively or additionally to the above-described pigment or dye, those used as a heat-insulating agent in interlayer films can be used as the colorant. Since the heat-insulating agent also blocks a certain amount of visible rays, the resin layer can be colored by incorporating the heat-insulating agent thereinto.

Typically, the heat-insulating agent is a material capable of absorbing infrared rays having a wavelength of 780 nm or more, i.e., heat rays. The heat-insulating agent is made of an inorganic material, and typically, heat-insulating particles are used. Specific examples thereof include metal oxide particles, and particles other than metal oxide particles, such as lanthanum hexaboride (LaB6) particles. Examples of the metal oxide particles include tin oxide particles such as aluminum-doped tin oxide particles, indium-doped tin oxide particles, and antimony-doped tin oxide particles (ATO particles); zinc oxide particles such as gallium-doped zinc oxide particles (GZO particles), indium-doped zinc oxide particles (IZO particles), aluminum-doped zinc oxide particles (AZO particles), tin-doped zinc oxide particles, and silicon-doped zinc oxide particles; titanium oxide particles such as niobium-doped titanium oxide particles; indium oxide particles such as tin-doped indium oxide particles (ITO particles); and tungsten oxide particles such as sodium-doped tungsten oxide particles, cesium-doped tungsten oxide particles (CWO particles), thallium-doped tungsten oxide particles, and rubidium-doped tungsten oxide particles. Heat-insulating particles other than these may also be used. The heat-insulating agents may be used singly or in combinations of two or more thereof.

Among these, the metal oxide particles are preferable since they have high-level heat ray-blocking function. It is more preferable to use at least one selected from the group consisting of ATO particles, GZO particles, ITO particles and CWO particles, and it is even more preferable to use ITO particles or CWO particles.

The lower limit of the average particle diameter of the heat-insulating particles is preferably 10 nm, more preferably 20 nm, and the upper limit is preferably 100 nm, more preferably 80 nm, even more preferably 50 nm. When the average particle diameter is equal to or more than the preferable lower limit described above, the heat-insulating particles have the sufficiently enhanced property of blocking heat rays. When the average particle diameter is equal to or less than the preferable upper limit described above, the heat-insulating agent is unlikely to block visible rays more than necessary. The "average particle diameter" means a volume-weighted average particle diameter. The average particle diameter can be determined using, for example, a particle size distribution analyzer ("UPA-EX150" manufactured by Nikkiso Co., Ltd.).

It is specifically preferable to use ITO, CWO, a phthalocyanine pigment, or a phthalocyanine dye as the colorant. Among those described above, it is preferable to use a pigment or dye. Use of any of pigments and dyes as the colorant enables easily coloring the interlayer film a desired color with a small amount thereof.

The content of the colorant in the entire interlayer film is, for example, 0.00001 mass% or more and 7 mass% or less based on the whole mass of the interlayer film. A content of the colorant of 0.00001 mass% or more enables appropriately coloring the interlayer film. A content of 7 mass% or less can prevent coloring more than necessary and also prevent impairment of various performances and functions of the interlayer film by the colorant.

The content of the colorant in the entire interlayer film is preferably 0.00001 mass% or more, more preferably 0.0001 mass% or more, even more preferably 0.001 mass% or more, still more preferably 0.01 mass% or more, still more preferably 0.1 mass% or more, and preferably 6 mass% or less, more preferably 4 mass% or less, even preferably 2 mass% or less.

The content of the colorant in each of the resin layers including the colorant is preferably 0.00005 mass% or more and 10 mass% or less based on the whole mass of the resin layer. A content of 0.00005 mass% or more enables appropriately coloring the interlayer film by the resin layer including the colorant. A content of 10 mass% or less can prevent coloring more than necessary and also prevent impairment of various performances and functions of each resin layer by the colorant. The content of the colorant in each of the resin layer including the colorant is preferably 0.0001 mass% or more, more preferably 0.001 mass% or more, even more preferably 0.01 mass% or more, still more preferably 0.1 mass% or more, and more preferably 7 mass% or less, even more preferably 5 mass% or less.

In a case where two or more colorant layers are provided in the interlayer film, the contents of the colorant in each of the resin layers may be the same or different from each other.

In a case where at least one resin layer in the interlayer film includes the colorant, it is preferable that the other layer(s) should substantially include no colorant. The phrase "substantially include no colorant" means that it is acceptable to include a colorant inevitably migrated from another member such as a colorant layer, and the content thereof is, for example, less than 0.00005 mass%, preferably less than 0.00001 mass%, more preferably 0 mass% based on the whole mass of the resin layer. A content of the colorant of 0.00005 mass% or more is also acceptable as long as the function fulfilled by including a colorant is not impaired. For example, it is acceptable that in an interlayer film having a shade layer including a colorant, the colorant of the shade layer may migrate to another resin layer, as long as the design and transmittance, which are the functions of the shade layer, are ensured.

### (Ultraviolet absorber)

Each of the resin layers composing the interlayer film may further include an ultraviolet absorber. More specifically, either one or both of the low-Tg resin layer and the high-Tg resin layer preferably include the ultraviolet absorber. The ultraviolet absorber included in each resin layer can prevent degradation of the interlayer film even when it is used in an environment irradiated with light such as sunlight for a long time.

Examples of the ultraviolet absorber to be used include a compounds with malonate ester skeleton, compounds with oxanilide skeleton, compounds with benzotriazole skeleton, compounds with benzophenone skeleton, compounds with triazine skeleton, compounds with benzoate skeleton, and compounds with hindered amine skeleton. Among these, the compounds with benzotriazole skeleton (benzotriazole compound) are preferable.

The ultraviolet absorbers may be used singly or in combinations of two or more thereof.

The ultraviolet absorber content of each of the resin layers (e.g., the low-Tg resin layer and the high-Tg resin layer) is preferably 0.01 mass% or more and 2 mass% or less based on the whole mass of the resin layer. An ultraviolet absorber content of 0.01 mass% or more enables appropriately preventing degradation of each of the resin layers by ultraviolet rays included in sunlight, to thereby enhance the durability. An ultraviolet absorber content of 2 mass% or less can prevent the resin layer from being colored with the ultraviolet absorber, and also tends to exhibit the effect commensurate with the content.

The ultraviolet absorber content is more preferably 0.05 mass% or more and 1.5 mass% or less, even more preferably 0.1 mass% or more and 1 mass% or less.

### (Antioxidant)

Each of the resin layers composing the interlayer film may further include an antioxidant. More specifically, either one or both of the low-Tg resin layer and the high-Tg resin layer preferably include the antioxidant. The antioxidant included in each resin layer of the interlayer film can prevent oxidative degradation of the interlayer film to enhance the durability of the interlayer film. In view of improving the durability of the interlayer film, either one or both of the low-Tg resin layer and the high-Tg resin layer composing the interlayer film may include the antioxidant in addition to the ultraviolet absorber.

Examples of the antioxidant include phenolic compounds, phosphoric acid compounds, and sulfur compounds. The antioxidant prevents oxidative degradation of a resin film to enhance the durability. Among the above, the phenolic compounds are preferable in view of enhancing the durability.

Examples of the phenolic compounds include 2,6-di-t-butyl-p-cresol (BHT), butylated hydroxyanisole (BHA), 2,6-di 2,6-di-t-butyl-4-ethylphenol, stearyl-β-(3,5-di-t-butyl-4-hydroxyphenyl) propionate, 2,2'-methylene-bis-(4-methyl-6-butylphenol), 2,2'-methylene bis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t butylphenol)butane, 1,3,5-trimethyl-2,4,6-tris-(3,5-di-t-butyl-4-hydroxybenzyl)benzene, and bis(3,3'-t-butylphenol) butyric acid glycol esters and pentaerythritol tetrakis[3-(3,5-di-tert-butyl-4-hydroxyphenyl) propionate].

Examples of the phosphoric acid compounds include trisnonylphenyl phosphite, tridecyl phosphite, 2-ethyl-2-butylpropylene-4,6-tri-tert-butylphenol phosphite, 9,10-dihydro-9-oxa-10-phosphaphenanthrene, tetra(tridecyl)isopropylidene diphenol diphosphite, and tris[2-tert-butyl-4-(3-tert-hydroxy-5-methylphenylthio)-5-methylphenyl]phosphite.

Examples of the sulfur compounds include dialkyl thiodipropionates such as dilauryl thiodipropionate, dimyristyl thiodipropionate, and distearyl thiodipropionate, and β-alkyl mercaptopropionate esters of polyols such as pentaerythritol tetra (β-dodecyl mercaptopropionate).

The antioxidants may be used singly or in combinations of two or more thereof.

The antioxidant content of each of the resin layers (e.g., the low-Tg resin layer and the high-Tg resin layer) is preferably 0.01 mass% or more and 2 mass% or less based on the whole mass of the resin layer. An antioxidant content of 0.01 mass% or more enables appropriately preventing oxidative degradation of the interlayer film to enhance the durability. An antioxidant content of 2 mass% or less tends to exhibit the effect commensurate with the content. The antioxidant content is more preferably 0.04 mass% or more and 1.5 mass% or less, even more preferably 0.06 mass% or more and 1 mass% or less.

Each of the resin layers composing the interlayer film may appropriately include known additives that are used for interlayer films, in addition to the above-described additives. Specific examples thereof include a light stabilizer, an adhesion modifier, a fluorescent brightener, and a crystal nucleating agent.

### [Thicknesses of interlayer film and each layer]

The thickness of the interlayer film is not particularly limited, and is, for example, 100 µm or more and 2500 µm or less, preferably 200 µm or more and 2000 µm or less, more preferably 300 µm or more and 1500 µm or less. When the thickness is equal to or more than the above-described lower limit, the interlayer film has enhanced resistance to impact, and also surely has adhesiveness to glass members for laminated glass, etc. On the other hand, the interlayer film having a thickness equal to or lower than the above-described upper limit can prevent a thickness of laminated glass larger than necessary.

The thickness of the interlayer film is the thickness of the interlayer film as a whole. The thickness of the interlayer film, and the thicknesses of the low-Tg resin layer and the high-Tg resin layer, which will be described below, each are an average thickness for twenty points, and the thickness at each point may be determined using a microscope as described above.

The thickness of the low-Tg resin layer is, for example, 30 µm or more and 500 µm or less. The low-Tg resin layer having a thickness equal to or more than the above-described lower limit surely has appropriate soundproof performance. The low-Tg resin layer having a thickness equal to or lower than the above-described upper limit can prevent a thickness of the interlayer film larger than necessary. From these points of view, the thickness of the low-Tg resin layer is preferably 50 µm or more and 300 µm or less, more preferably 80 µm or more and 240 µm or less.

Two or more low-Tg resin layers may be provided in the interlayer film, and in that case, the above-described thickness of the low-Tg resin layer is the total thickness of the low-Tg resin layers.

In a case where two or more low-Tg resin layers are provided, the plurality of the low-Tg resin layers may have the same thickness or different thicknesses from each other. In a case where two low-Tg resin layers, for example, are provided, the thickness of each of the low-Tg resin layers is, for example, 20 µm or more and 300 µm or less, preferably 25 µm or more and 180 µm or less, more preferably 35 µm or more and 140 µm or less.

The thickness of the high-Tg resin layer is, for example, 70 µm or more and 2000 µm or less. The high-Tg resin layer having a thickness equal to or more than the above-described lower limit can impart appropriate mechanical strength, penetration resistance, etc. to the interlayer film. The high-Tg resin layer having a thickness equal to or lower than the above-described upper limit can prevent a thickness of the interlayer film larger than necessary. From these points of view, the thickness of the high-Tg resin layer is preferably 150 µm or more and 1500 µm or less, more preferably 200 µm or more and 1000 µm or less, even more preferably 300 µm or more and 800 µm or less.

Two or more high-Tg resin layers may be provided in the interlayer film, and in that case, the above-described thickness of the high-Tg resin layer is the total thickness of the high-Tg resin layers.

In a case where two or more high-Tg resin layers are provided, the plurality of the high-Tg resin layers may have the same thickness or different thicknesses from each other. In a case where two high-Tg resin layers, for example, are provided, the thickness of each of the high-Tg resin layers is, for example, 35 µm or more and 900 µm or less, preferably 75 µm or more and 700 µm or less, more preferably 90 µm or more and 580 µm or less.

In a case where three high-Tg resin layers, for example, are provided, the thickness of each of the high-Tg resin layers is, for example, 30 µm or more and 700 µm or less, preferably 50 µm or more and 500 µm or less, more preferably 70 µm or more and 400 µm or less.

The dimension of the interlayer film from one end to the other end in widthwise direction (hereinafter also referred to as "product width") is not particularly limited, and is, for example, 300 mm or more, preferably 500 mm or more, more preferably 600 mm or more. Also the upper limit of the product width is not limited, and the product width is, for example, 5000 mm or less, preferably 3000 mm or less, more preferably 2000 mm or less, even more preferably 1800 mm or less.

### [Surface texture of interlayer film]

Either one or both of the main surfaces of the interlayer film preferably have uneven texture. In the laminated glass, each main surface of the interlayer film is the surface in contact with the glass member for the laminated glass. At least one main surface of the interlayer film preferably has a ten point height of roughness profile of 10 µm or more. The interlayer film having a ten point height of roughness profile of 10 µm or more is excellent in the deaeration property, so that air bubbles are unlikely to generate on the surface of the interlayer film when the interlayer film is press-bonded to a glass member for a laminated glass. In addition, such a ten point height of roughness profile can prevent blocking when the interlayer films are put on top of one another or when the interlayer film is rolled up, and such a ten point height of roughness profile can also prevent the occurrence of optical distortion, etc. The ten point height of roughness profile is more preferably 15 µm or more, even more preferably 20 µm or more. In view of enhancing the deaeration property and suppressing optical distortion, the ten point height of roughness profile is preferably 95 µm or less, more preferably 80 µm or less, even more preferably 70 µm or less.

The ten point height of roughness profile is a ten point height of roughness profile as measured in accordance with JIS B 0601-1994 (Rzjis94). As an instrument for measuring the ten point height of roughness profile (Rzjis94), "Surfcorder SE300" manufactured by Kosaka Laboratory Ltd. can be used, for example. More specifically, the ten point height of roughness profile (Rz) can be measured in an environment at 23°C and 30 RH% with a contact stylus having a tip radius of 2 µm and a tip angle of 60° under the following measurement conditions: cut-off value in measurement 2.5 mm, sampling length 2.5 mm, measurement length 12.5 mm, preparatory length 2.5 mm, traveling rate of contact stylus 0.5 mm/sec. In a case where the interlayer film has embossment in the form of a marked line given on its main surface, the ten point height of roughness profile (Rz) is measured by allowing the contact stylus to travel in the vertical direction to the linear direction of the marked line.

The ten point height of roughness profile can be determined by measuring Rzjis94 at 10 points equally spaced from one end to the other end and calculating the average thereof. The interlayer film may have the ten point height of roughness profile as described above only on one main surface thereof, but preferably has the ten point height of roughness profile on both main surfaces thereof.

The method for imparting uneven texture to the interlayer film is not particularly limited, and uneven texture may be imparted by, for example, lip embossing method, embossing roll method, or calender roll method, to the interlayer film obtained by the production method described below.

### (Method for producing interlayer film)

The method for producing the interlayer film is not particularly limited, and the interlayer film is preferably formed by extrusion. Specifically, a resin, or a resin composition including a resin and also a plasticizer and additives such as a colorant, for each resin layer may be extruded to form each resin layer. The interlayer film of the present invention is more preferably produced by co-extrusion.

In co-extrusion, a co-extruder may be used that includes a plurality of extruders and a feed block for multilayer. In the co-extruder, the tips of the extruders may be connected to the feed block for multilayer via melted resin-conveying pipes or the like.

In co-extruder, resins or resin compositions for forming resin layers may be fed from respective extruders to the feed block for multilayer via the melted resin-conveying pipes or the like, join in the feed block for multilayer, and be co-extruded from a die (T-die) into an interlayer film having multilayers. Alternatively, resins or resin compositions for forming respective resin layers may be fed from respective extruders to a die for multilayer (M-die) via the melted resin-conveying pipes or the like, join in the die for multilayer, and be co-extruded.

In the present invention, the difference between the maximum and minimum values of the thickness ratio R(x) of the low-Tg resin layer is small. In co-extrusion, gaps at coordinates in the widthwise direction (TD) of the flow path (for example, slit) through which the resin or resin composition for forming the low-Tg resin layer or high-Tg resin layer, for example, pass can be adjusted to obtain such a small difference. For example, the slit may be a slit of the flow path of a resin at the location where the resins join, the flow path being provided in the feed block or the die for multilayer. Alternatively, uneven texture may be given with respect to the widthwise direction (TD) of each resin flow path so as to vary the gap, whereby points at which the resin easily flows and points at which the resin does not easily flow are formed. This enables adjustment of the resin layers after joining even when the gap of the slit at the resin-joining point is uniform in the widthwise direction (TD).

In a case where the wedge-shaped interlayer film is produced, the gap at the outlet of the die is preferably adjusted along the widthwise direction so that the gap is asymmetry according to the wedge shape.

### (Laminated glass)

The present invention further provides laminated glass. The laminated glass includes the first and second glass members for laminated glass and the interlayer film interposed between the first and second glass members for laminated glass. The first and second glass members for laminated glass may be adhered to each other via the interlayer film.

### (First and second glass members for laminated glass)

The first and second glass members used for laminated glass may be glass sheet. The glass sheet may be inorganic glass or organic glass, and is preferably inorganic glass. Examples of the inorganic glass include, but not particularly limited to, clear glass, float glass sheet, tempered glass, colored glass, polished glass sheet, figured glass, screened glass sheet, lined glass sheet, ultraviolet absorbing glass sheet, infrared-reflecting glass sheet, infrared-absorbing glass sheet, and green glass.

As the organic glass, so-called resin glass may be generally used, and may be any of various organic glass sheet, including polycarbonate sheets, (meth) acrylic sheets such as polymethyl methacrylate sheets, acrylonitrile styrene copolymer sheets, acrylonitrile butadiene styrene copolymer sheets, polyester sheets such as polyethylene terephthalate sheets, fluororesin sheet, polyvinyl chloride sheet, chlorinated polyvinyl chloride sheet, polypropylene sheet, polystyrene sheet, polysulfone sheet, epoxy resin sheet, phenol resin sheet, unsaturated polyester resin sheet, and polyimide resin sheet. The organic resin sheet may be appropriately subjected to surface treatment, etc.

The first and second glass members for laminated glass may be made of the same kind of material or may be made of materials different from each other. For example, one may be inorganic glass with the other being organic glass. However, it is preferable that both of the first and second glass members for laminated glass should be inorganic glass or should be organic glass.

The thicknesses of the respective glass sheets used for the first and second glass members for laminated glass are not particularly limited, and are each, for example, about 0.1 to 15 mm, preferably 0.5 to 5mm. The thicknesses of the respective glass sheets may be the same or different from each other.

In a case where the thicknesses of the first and second glass members for laminated glass are different from each other, the difference between the thicknesses may be 0.1 mm or more, preferably 0.2 mm or more. The difference between the thicknesses of the first and second glass members for laminated glass may be, for example, 2 mm or less, preferably 1 mm or less, but not particularly limited thereto.

The first and second glass members for laminated glass may be flat glass or bent glass. In a case where one of the first and second glass members for laminated glass is flat glass, it is preferable that the other should also be flat glass. In a case where one is bent glass, it is preferable that the other should also be bent glass.

The bent glass preferably has a bend radius in the widthwise direction of, for example, 4000 mm or more, more preferably 6000 mm or more, even more preferably 8000 mm or more, even more preferably 10000 mm or more, and preferably 25000 mm or less, more preferably 20000 mm or less, even more preferably 15000 mm or less.

The method for producing the laminated glass is not particularly limited, and the laminated glass may be obtained by sandwiching the interlayer film between two glass members for laminated glass and press-bonding them together.

A more specific method is as follows. The interlayer film is sandwiched between the first and second glass members for laminated glass, and the resultant is allowed to pass through press rolls or is put in a rubber bag followed by decompression/suction, so that air remaining between the two glass member and the interlayer film is removed. Then the resultant is subjected to pre-adhesion at about 70 to 110°C to obtain a laminated body. Next, the laminated body is subjected to press-bonding at about 120 to 150°C and a pressure of 1 to 1.5 MPa by placing in an autoclave or by pressing. Thus, a laminated glass can be obtained.

The interlayer film and the laminated glass of the present invention can be used for various types of vehicles including cars such as automobiles and railcars, aircraft, and ships, and also buildings. They can also be used for applications to various display devices such as liquid crystal displays and organic electroluminescent displays as a surface protection panel thereof, for example. The interlayer film and the laminated glass can be used for another application.

The interlayer film and the laminated glass are preferably an interlayer film and laminated glass for vehicles or buildings, and more preferably an interlayer film and laminated glass for vehicles.

The interlayer film and the laminated glass may be used for application to head-up displays (HUDs) in the vehicles, etc. For example, in application to HUDs for vehicles, the laminated glass is irradiated with light from a light source for HUDs provided inside the vehicle, and rays reflected on the laminated glass enter the eyes of a driver or the like inside the vehicle so that the rays are perceived as an HUD image. For the application to HUDs, a wedge-shaped interlayer film is preferably used as the interlayer film in view of easily reduce double images due to reflection.

### Examples

The present invention will now be described in more detail by way of Examples, but the present invention is not limited by these Examples at all.

The measurement methods and evaluation methods for physical properties are as follows.

### [Mechanical impedance measurement (MIM)]

Mechanical impedance measurement was carried out in accordance with ISO 16940:2008 on laminated glass including the interlayer film of each of Examples and Comparative Examples. The laminated glass was trisected in the direction from one end to the other end (TD) into regions, and the mechanical impedance measurement was carried out at the center position of each region. The laminated glass was left in an environment at 23°C and 30 RH% for 8 weeks before using for the measurement.

Specifically, the resulting laminated glass for evaluation of soundproof performance was vibrated using a vibration-creating machine for dumping test ("Vibration Test System G21-005D" manufactured by Shinken co., Ltd.). The vibration characteristics obtained therefrom was amplified using a mechanical impedance measurement device ("XG-81" manufactured by RION CO., LTD.), and the vibration spectrum was analyzed using an FFT spectrum analyzer ("FFT analyzer SA-01A2" manufactured by RION CO., LTD.) to determine the primary resonance frequency at 20°C and the loss factor at 20°C for each region. The maximum and minimum values thereof and also the difference between the maximum and minimum values are shown in Tables 2 and 3.

### [Sound transmission loss (STL)]

In a reverberation chamber in accordance with ISO 10140-5, which was composed of the first reverberation chamber as a sound source chamber and the second reverberation chamber as a sound receiving chamber connected to each other, the laminated glass obtained in each of Examples and Comparative Examples was disposed between the first reverberation chamber and the second reverberation chamber. The sound transmission loss was measured at 20°C using a sound transmission loss measuring device "Intensity prove SI-50, Multichannel analyzer SA-02" manufactured by RION CO., LTD. Specifically, the sound transmission loss (dB) in accordance with JIS A1441-1 was measured by the intensity method. The measurement was carried out at a center frequency of 1/3 octave band. Evaluation was made on the basis of the found sound transmission loss on the evaluation scale below. The sample was left in an environment at 23°C and 30 RH% for 8 weeks before using for the measurement.

Evaluation was made on the basis of the STL value at 2500 Hz on the following rating scale.
A: 40.6 dB or more
B: 40.3 dB or more and less than 40.6 dB
C: 40.1 dB or more and less than 40.3 dB
D: less than 40.1 dB

### [Example 1]

### (Preparation of interlayer film)

In the first extruder, 40 parts by mass of a plasticizer and an ultraviolet absorber and an antioxidant in the respective amounts in mass% described in Table 1 were added to 100 parts by mass of a resin, according to formulation A1 described in Table 1, and the resultant was kneaded to prepare a resin composition for layer 1 and layer 3. In the second extruder, 60 parts by mass of a plasticizer and an ultraviolet absorber and an antioxidant in the respective amounts in mass% described in Table 1 were added to 100 parts by mass of a resin, according to formulation A2 described in Table 1, and the resultant was kneaded to prepare a resin composition for layer 2.

A co-extruder was used that included the first and second extruders, wherein the first and second melted resin-conveying pipes were connected to the tips of the first and second extruders, respectively, and wherein a feed block for multilayer was attached to the tips of the first and second melted resin-conveying pipes. In the co-extruder, resins or resin compositions were fed from the first and second extruders to a die (T-die) through the feed block. Co-extrusion was carried out while adjusting the amounts of the resin compositions extruded from the T-die, to thereby obtain an interlayer film including a pair of high-Tg resin layers (layers 1, 3) and a low-Tg resin layer (layer 2) sandwiched therebetween, as shown in Fig. 1. At that time, in order to make the thickness of each layer almost uniform, the width of the gap at each coordinate in TD was manually adjusted at the slit of the flow path just before the resins joined in the feed block, on the basis of the difference between the target thickness profile and the thickness profile obtained by measurement.

The resulting interlayer film was subjected to embossing by emboss roll method, and then cut into a product width (longitudinal length) of 1000 mm and a widthwise length of 1000 mm, to thereby obtain an interlayer film of Example 1. For the resulting interlayer film, the thickness ratio R(x) at each coordinate [x (mm)] in TD was calculated, and the maximum and minimum values of the thickness ratio R(x) and the difference between them, ΔR(x), were determined according to the methods described herein. Further, the approximate primary straight line f(x)=ax+b was determined, and the standard deviation was also calculated. The ten point height of roughness profile Rzjis94 was also determined on each main surface of the interlayer film. The results of these are shown in Table 2. The glass transition temperature of each layer composing the interlayer film is shown in Table 1.

### (Preparation of laminated glass)

The interlayer film obtained was sandwiched between two clear float glass sheets (for mechanical impedance measurement: length 25 mm x width 300 mm x thickness 2.0 mm; for measurement of sound transmission loss: length 1000 mm x width 1000 mm x thickness 2.0 mm) to obtain a laminated body. The laminated body was placed in a rubber bag, followed by deaeration for 20 minutes at a degree of vacuum of 2.6 kPa. Then, the deaerated bag was transferred into an oven and hold at 90°C for 30 minutes for vacuum press, to thereby carrying out preliminarily press-bonding of the laminated body. The laminated body after the preliminary press-bonding was subjected to press-bonding for 20 minutes in an autoclave under the conditions of 135°C and a pressure of 1.2 MPa, to thereby obtain a laminated glass. The laminated glass obtained was left still in a room at 23°C and 30RH% for 8 weeks, as described above, and then subjected to mechanical impedance measurement. Also, the laminated glass obtained was left still in a room at 23°C and 30RH% for 8 weeks, and then subjected to measurement of sound transmission loss (STL).

### [Example 2]

This example was carried out in the same manner as in Example 1, except that the resin or resin compositions were fed from the first and second extruders to a die for multilayer (M-die), and that co-extrusion was carried out while adjusting the gap of the slit along the widthwise direction (TD) just before the resins joined inside the die for multilayer.

### [Example 3]

This example was carried out in the same manner as in Example 1, except that a projection was provided in the flow pass of each resin in the feed block, and that the height of the projection was adjusted along the widthwise direction (TD) to make the gap of the slit just before the resins joined uniform in the widthwise direction (TD).

### [Example 4]

This example was carried out in the same manner as in Example 1, except for changing the gap of the slit in the widthwise direction (TD) in the feed block.

### [Example 5]

This example was carried out in the same manner as in Example 1, except for changing the gap of the slit in the widthwise direction (TD) in the feed block.

### [Example 6]

This example was carried out in the same manner as in Example 1, except for changing the gap of the slit in the widthwise direction (TD) in the feed block.

### [Examples 7, 8, 12]

These examples were each carried out in the same manner as in Example 3, except that the resin composition for layer 2 was changed as described in Tables 1 and 2.

### [Examples 9, 13]

These examples were each carried out in the same manner as in Example 3, except that the resin composition for layers 1 and 3 was changed as described in Tables 1 and 2.

### [Examples 10, 11]

These examples were each carried out in the same manner as in Example 4, except that the ratio between the flow rates of the resins in the feed block was changed so that the thickness of each resin layer was as described in Table 2.

### [Examples 14 to 16]

These examples were each carried out in the same manner as in Example 1 to obtain a wedge-shaped interlayer film having a shape of the cross section shown in Fig. 3, except that extrusion was carried out under the condition that the gap at the outlet of the die was asymmetry in the widthwise direction (TD) so that the wedge angle was the value described in Table 3 over the whole from one end to the other end.

### [Example 17]

This example was carried out in the same manner as in Example 14 to obtain a wedge-shaped interlayer film having a shape of the cross section shown in Fig. 4, except that extrusion was carried out under the condition that the gap at the outlet of the die was asymmetry in the widthwise direction (TD) in the following manner: when viewed from one end to the other end, the wedge angle was the value described in Table 3 in the region from the one end to the point at 700 mm and the wedge angle was 0 mrad in the region from the point at 700 mm to the other end.

### [Example 18]

This example was carried out in the same manner as in Example 14, except that extrusion was carried out under the condition that the gap at the outlet of the die was asymmetry in the widthwise direction (TD) so that the wedge angle changed from 0.7 mrad at one end to 0.2 mrad at the other end. The wedge angle described in the table 3 is the average wedge angle.

### [Examples 19 and 20]

These examples were each carried out in the same manner as in Example 14, except that the thickness of each resin layer was changed as described in Table 3.

### [Example 21]

This examples was carried out in the same manner as in Example 1, except that an interlayer film having a laminate structure shown in Fig. 2 was prepared using a feed block for five layers while adjusting the gap of the slit in the widthwise direction (TD) inside the feed block so that the thickness of each layer was as described in Table 3.

### [Comparative Example 1]

This example was carried out in the same manner as in Example 1, except for not adjusting the width of the gap at each coordinate in TD in the slit just before the resins joined in the feed block.

### [Comparative Example 2]

In an extruder, 40 parts by mass of a plasticizer and an ultraviolet absorber and an antioxidant in the respective amounts in mass% described in Table 1 were added to 100 parts by mass of a resin, according to formulation A1 described in Table 1, and the resultant was kneaded to prepare a resin composition for layer 1. The resulting resin composition was extruded from a T-die to obtain an interlayer film consisting of a single resin layer. By using the interlayer film obtained, laminated glass was prepared and evaluated in the same manner as in Example 1.

**[Table 1]**

| | High-Tg resin layer (surface layer) | | | Low-Tg resin layer ( intermediate layer) | | | |
|---|---|---|---|---|---|---|---|
| Resin layer | A1 | A1 (Colored) | B1 | A2 | A2 (Colored) | B2 | C2 |
| Kind of resin | PVB | PVB | PVB | PVB | PVB | PVB | PVB |
| Average polymerization degree | 1700 | 1700 | 1700 | 3000 | 3000 | 2300 | 3000 |
| Hydroxyl group content (mol%) | 30.3 | 30.3 | 24.7 | 23.8 | 23.8 | 22.9 | 26.5 |
| Acetylation degree (mol%) | 0.9 | 0.9 | 0.9 | 12.4 | 12.4 | 12.1 | 1 |
| Acetalization degree (mol%) | 68.8 | 68.8 | 74.4 | 63.8 | 63.8 | 65 | 72.5 |
| Resin (parts by mass) | 100 | 100 | 100 | 100 | 100 | 100 | 100 |
| Plasticizer (parts by mass) | 40 | 40 | 45 | 60 | 60 | 60 | 40 |
| Tinuvin326 (mass%) | 0.2 | 0.2 | 0.2 | 0.2 | 0.2 | 0.2 | 0.2 |
| BHT (mass%) | 0.2 | 0.2 | 0.2 | 0.2 | 0.2 | 0.2 | 0.2 |
| Colorant (mass%) | - | 0.5 | - | - | 0.2 | - | - |
| Glass transition temperature (°C) | 27 | 27 | 16 | -4 | -4 | 2 | 13 |
| Refractive index | 1.48 | 1.48 | 1.48 | 1.465 | 1.465 | 1.465 | 1.465 |

| | | | | | | | |
|---|---|---|---|---|---|---|---|
| [0129] * Table 1 shows the average polymerization degree, the content (mol%) of the hydroxyl group, the acetylation degree (mol%), and the acetalization degree (mol%) of the polyvinyl butyral resin (PVB) used for each resin layer. * In Table 1, an amount in mass% is an amount based on the total mass of each resin layer, and an amount in parts by mass is an amount in parts by mass per 100 parts by mass of the resin (polyvinyl butyral resin). * In Table 1, the components other than the resin were as follows. Plasticizer: triethylene glycol-di-2-ethylhexanoate (3GO) Ultraviolet Absorber: Product name "Tinuvin 326," manufactured by BASF SE, benzotriazole compound Antioxidant: 2,6-di-t-butyl-p-cresol (BHT) Colorant: tin-doped indium oxide particles (ITO), cesium-doped tungsten oxide particles (CWO) | | | | | | | |

**[Table 2]**

| | | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|---|
| Layered structure | Resin layer | Layer 1 | A1 | A1 | A1 | A1 | A1 | A1 | A1 | A1 | B1 | A1 | A1 | A1 | A1 (Colored) |
| | | Layer 2 | A2 | A2 | A2 | A2 | A2 | A2 | B2 | C2 | A2 | A2 | A2 | A2 (Colored) | A2 |
| | | Layer 3 | A1 | A1 | A1 | A1 | A1 | A1 | A1 | A1 | B1 | A1 | A1 | A1 | A1 (Colored) |
| | | Layer 4 | - | - | - | - | - | - | - | - | - | - | - | - | - |
| | | Layer 5 | - | - | - | - | - | - | - | - | - | - | - | - | - |
| | Average thickness | Layer 1 | 330 | 330 | 330 | 330 | 330 | 330 | 330 | 330 | 330 | 280 | 100 | 330 | 330 |
| | | Layer 2 | 100 | 100 | 100 | 100 | 100 | 100 | 100 | 100 | 100 | 200 | 100 | 100 | 100 |
| | | Layer 3 | 330 | 330 | 330 | 330 | 330 | 330 | 330 | 330 | 330 | 280 | 560 | 330 | 330 |
| | | Layer 4 | - | - | - | - | - | - | - | - | - | - | - | - | - |
| | | Layer 5 | - | - | - | - | - | - | - | - | - | - | - | - | - |
| | Total average thickness (µm) 760 | | | 760 | 760 | 760 | 760 | 760 | 760 | 760 | 760 | 760 | 760 | 760 | 760 |
| Roughness | Front side | µm | 38 | 50 | 40 | 27 | 34 | 38 | 30 | 40 | 45 | 39 | 10 | 45 | 38 |
| | Back side | µm | 34 | 54 | 39 | 35 | 39 | 33 | 29 | 45 | 24 | 39 | 40 | 39 | 38 |
| Thickness ratio R(x) | Max. | % | 14.1 | 14.8 | 15 | 15.5 | 16.9 | 15 | 15 | 15 | 14.8 | 29 | 14.9 | 15 | 15 |
| | Min. | % | 13.2 | 12.1 | 11.8 | 10 | 9.3 | 10.9 | 11.8 | 11.8 | 12.1 | 24.1 | 10.1 | 11.8 | 11.8 |
| | Difference | % | 0.9 | 2.7 | 3.2 | 5.5 | 7.6 | 4.1 | 3.2 | 3.2 | 2.7 | 4.9 | 4.8 | 3.2 | 3.2 |
| f(x) | a | | 1.5 | 1.5 | 1.5 | 5 | 10.7 | 0.6 | 1.5 | 1.5 | 1.5 | 3 | 1.4 | 1.5 | 1.5 |
| | b | | 12.3 | 12.3 | 12.3 | 10.5 | 8 | 12.2 | 12.3 | 12.3 | 12.3 | 25.1 | 11.8 | 12.3 | 12.3 |
| | Standard deviation | | 0.3 | 0.6 | 0.9 | 1.1 | 1.4 | 1.9 | 0.9 | 0.9 | 0.6 | 0.9 | 0.9 | 0.9 | 0.9 |
| MIM Primary resonance frequency | Min. | | 138.6 | 136.7 | 136.2 | 135.0 | 131.8 | 136.2 | 168.0 | 188.0 | 136.7 | 113.4 | 136.5 | 136.2 | 136.2 |
| | Max. | | 141.1 | 144.6 | 145.6 | 152.5 | 155.6 | 148.8 | 174.0 | 190.0 | 144.6 | 119.4 | 152.0 | 145.6 | 145.6 |
| | Difference | Hz | 2.6 | 7.9 | 9.4 | 17.5 | 23.8 | 12.6 | 6.0 | 2.0 | 7.9 | 6.0 | 15.6 | 9.4 | 9.4 |
| MIM Loss factor | Min. | | 0.283 | 0.280 | 0.280 | 0.278 | 0.274 | 0.280 | 0.32 | 0.385 | 0.280 | 0.250 | 0.280 | 0.280 | 0.280 |
| | Max. | | 0.286 | 0.290 | 0.291 | 0.299 | 0.303 | 0.295 | 0.33 | 0.39 | 0.290 | 0.258 | 0.299 | 0.291 | 0.291 |
| | Difference | | 0.0031 | 0.0096 | 0.0115 | 0.0213 | 0.0289 | 0.0154 | 0.0100 | 0.0050 | 0.0096 | 0.0079 | 0.0189 | 0.0115 | 0.0115 |
| Wedge angle | | mrad | - | - | - | - | - | - | - | - | - | - | - | - | - |
| Ratio between thicknesses at one end and the other end | | | - | - | - | - | - | - | - | - | - | - | - | - | - |
| Feature of cross section | | | Uniform film | Uniform film | Uniform film | Uniform film | Uniform film | Uniform film | Uniform film | Uniform film | Uniform film | Uniform film | Uniform film | Uniform film | Uniform film |
| Position of low-Tg resin layer | | | Center | Center | Center | Center | Center | Center | Center | Center | Center | Center | Not center | Center | Center |
| | | Distance X | - | - | - | - | - | - | - | - | - | - | 30% | - | - |
| Evaluation | STL@2500Hz | | A | A | A | B | C | C | B | C | B | B | B | A | A |

**[Table 3]**

| | | | Example 14 | Example 15 | Example 16 | Example 17 | Example 18 | Example 19 | Example 20 | Example 21 | Comparative Example 1 | Comparative Example 2 |
|---|---|---|---|---|---|---|---|---|---|---|---|---|
| Layered structure | Resin layer | Layer 1 | A1 | A1 | A1 | A1 | A1 | A1 | A1 | A1 | A1 | A1 |
| | | Layer 2 | A2 | A2 | A2 | A2 | A2 | A2 | A2 | A2 | A2 | - |
| | | Layer 3 | A1 | A1 | A1 | A1 | A1 | A1 | A1 | A1 | A1 | - |
| | | Layer 4 | - | - | - | - | - | - | - | A2 | - | - |
| | | Layer 5 | - | - | - | - | - | - | - | A1 | - | - |
| | Average thickness (µm) | Layer 1 | 363 | 439 | 525 | 395 | 391 | 317 | 194 | 250 | 330 | 760 |
| | | Layer 2 | 110 | 133 | 159 | 120 | 119 | 96 | 130 | 50 | 100 | - |
| | | Layer 3 | 363 | 439 | 525 | 395 | 391 | 317 | 661 | 160 | 330 | - |
| | | Layer 4 | - | - | - | - | - | - | - | 50 | - | - |
| | | Layer 5 | - | - | - | - | - | - | - | 250 | - | - |
| | Total average thickness (µm) | | 835 | 1010 | 1210 | 910 | 901 | 730 | 985 | 760 | 760 | 760 |
| Roughness | Front side | µm | 45 | 19 | 25 | 32 | 34 | 29 | 31 | 49 | 38 | 38 |
| | Back side | µm | 46 | 30 | 22 | 28 | 35 | 40 | 34 | 40 | 37 | 37 |
| Thickness ratio R(x) | Max. | % | 14 | 13.9 | 14.3 | 16.6 | 14.1 | 15 | 14.2 | 15 | 20 | 0.0001 |
| | Min. | % | 12.8 | 12.9 | 12.5 | 10.1 | 12 | 11 | 11.2 | 12.5 | 2.9 | 0.000001 |
| | Difference | % | 1.2 | 1 | 1.8 | 6.5 | 2.1 | 4 | 3 | 2.5 | 17.1 | |
| f(x) | a | | 1.5 | 1.3 | -1.6 | -4 | 0.6 | 0.2 | 1.3 | 1.2 | 6 | - |
| | b | | 12.7 | 12.8 | 14.2 | 15.4 | 12.8 | 12.9 | 12.1 | 13.2 | 8.5 | - |
| | Standard deviation | | 0.9 | 0.7 | 0.8 | 1.1 | 0.8 | 0.9 | 0.8 | 1 | 2.2 | - |
| MIM Primary resonance frequency | Min. | | 138.8 | 139.1 | 138.0 | 132.4 | 138.6 | 136.2 | 138.3 | 136.2 | 125.7 | 179.0 |
| | Max. | | 142.3 | 142.0 | 143.3 | 152.0 | 144.9 | 148.5 | 147.7 | 143.3 | 215.1 | 179.0 |
| | Difference | Hz | 3.5 | 2.9 | 5.3 | 19.6 | 6.4 | 12.3 | 9.4 | 7.1 | 89.3 | 0 |
| MIM Loss factor | Min. | | 0.283 | 0.283 | 0.282 | 0.275 | 0.283 | 0.280 | 0.282 | 0.280 | 0.266 | 0.030 |
| | Max. | | 0.287 | 0.287 | 0.288 | 0.299 | 0.290 | 0.295 | 0.294 | 0.288 | 0.369 | 0.030 |
| | Difference | | 0.0043 | 0.0036 | 0.0064 | 0.0239 | 0.0078 | 0.0150 | 0.0115 | 0.0087 | 0.102 | 0 |
| Wedge angle | | mrad | 0.15 | 0.5 | 0.9 | 0.45 | 0.45 | 0.7 | 0.45 | - | - | - |
| Ratio between thicknesses at one end and the other end | | | 0.84 | 0.60 | 0.46 | 0.71 | 0.63 | 0.35 | 0.63 | - | - | - |
| Feature of cross section | | | wedge-shaped as whole | wedge-shaped as whole | wedge-shaped as whole | wedge-shaped as portion | wedge-shaped as whole | wedge-shaped as whole | wedge-shaped as whole | Uniform film | Uniform film | Uniform film |
| Position of low-Tg resin layer | | | Center | Center | Center | Center | Center | Center | Not center | Not center | Center | - |
| | | Distance X | - | - | - | - | - | - | 24% | 14% | - | - |
| Evaluation | STL@2500Hz | | A | A | A | B | A | A | A | A | D | D |

| | | | | | | | | | | | | |
|---|---|---|---|---|---|---|---|---|---|---|---|---|
| * In a case where the interlayer film had a multilayered structure, the layered structure in Tables 2 and 3 shows that layer 1 to layer 3 or layer 1 to layer 5 were put on top of one another in this order. * The "wedge angle" shown in Tables 2 and 3 is the average of the partial wedge angle measured on the part having a wedge angle of 0.1 mrad or more. | | | | | | | | | | | | |

As shown in Examples above, the absolute value of the difference between the maximum and minimum values of the primary resonance frequency (ΔPR) and that of the loss factor (ΔLF), which were determined by MIM, were decreased, as the difference between the maximum and minimum values of the thickness ratio of the low-Tg resin layer to the entire interlayer film, R(x), (i.e., ΔR(x)) is decreased. Accordingly, variation in the soundproof performance among regions was suppressed and thus the evaluation results for the sound transmission loss were good.

In contrast, in Comparative Example 1, the difference between the maximum and minimum values of the thickness ratio of the low-Tg resin layer to the entire interlayer film, R(x), (i.e., ΔR(x)) was large. Accordingly, variation in the soundproof performance among regions was not suppressed sufficiently, and thus the evaluation result for the sound transmission loss was not good. In Comparative Example 2, the interlayer film was a single layer film without any low-Tg resin layer, and thus, the soundproof performance was insufficient.

### Reference Signs List

10A to 10E Interlayer film for laminated glass
11 Low-Tg resin layer
12 High-Tg resin layer
13A One end
13B Other end
C center
X distance
α wedge angle

## Claims

1. An interlayer film for laminated glass, comprising two or more resin layers,
at least one of the resin layers having a glass transition temperature different from that of the other resin layer or layers,
the two or more resin layers including a low-Tg resin layer having the lowest glass transition temperature among the two or more resin layers,
the interlayer film for laminated glass having a thickness ratio of the low-Tg resin layer to the entire interlayer film, R(x), wherein x [mm] represents a coordinate on a straight line from one end of the interlayer film to the other end, and
the difference between the maximum and minimum values of the thickness ratio R(x) being 8% or less.

2. An interlayer film for laminated glass, when the interlayer film is trisected into regions from one end of the interlayer film to the other end, each of the regions having a primary resonance frequency as determined by mechanical impedance measurement in accordance with ISO 16940:2008, and the absolute value of the difference between the maximum and minimum values of the primary resonance frequency being 50 Hz or less.

3. An interlayer film for laminated glass, when the interlayer film is trisected into regions from one end of the interlayer film to the other end, each of the regions having a loss factor as determined by mechanical impedance measurement in accordance with ISO 16940:2008, and the absolute value of the difference between the maximum and minimum values of the loss factor being 0.1 or less.

4. The interlayer film for laminated glass according to claim 1, wherein a standard deviation of a deviation ΔR(x) of the thickness ratio R(x) with respect to f(x) is 0.1% or more and 2% or less,
wherein f(x) is an approximate primary straight line f(x)=ax+b calculated from the thickness ratios R(x) and the coordinates x in a range of x=0.1X to 0.9X, wherein the straight line from one end of the interlayer film to the other end has a whole length of 1.0X, and a and b are each a coefficient.

5. The interlayer film for laminated glass according to claim 2 or 3, comprising two or more resin layers, wherein at least one of the resin layers has a glass transition temperature different from that of the other resin layer or layers, and the two or more resin layers include a low-Tg resin layer having the lowest glass transition temperature among the two or more resin layers, and
wherein a standard deviation of a deviation ΔR(x) of the thickness ratio R(x) to f(x) is 0.1% or more and 2% or less, wherein R(x) is a thickness ratio of the low-Tg resin layer to the entire interlayer film, wherein x [mm] represents a coordinate on a straight line from one end of the interlayer film to the other end, and f(x) is an approximate primary straight line f(x)=ax+b calculated from the thickness ratios R(x) and the coordinates x in a rage of x=0.1X to 0.9X, wherein the straight line from one end of the interlayer film to the other end has a whole length of 1.0X, and a and b are each a coefficient.

6. The interlayer film for laminated glass according to claim 1, wherein the difference between the maximum and minimum values of the thickness ratio R(x) is more than 0%.

7. The interlayer film for laminated glass according to claim 1 or 6, wherein the thickness ratio R(x) is within a range of 1% or more and 30% or less.

8. The interlayer film for laminated glass according to any one of claims 1 to 3, having a wedge-shaped portion with a wedge angle of 0.1 mrad or more in a cross section thereof.

9. The interlayer film for laminated glass according to claim 8, wherein the wedge-shaped portion has a portion at which the wedge angle changes.

10. The interlayer film for laminated glass according to any one of claims 1 to 3, wherein a thickness thereof at one end is different from that at the other end.

11. The interlayer film for laminated glass according to any one of claims 1 to 3, comprising two or more resin layers, wherein at least one of the resin layers has a glass transition temperature different from that of the other resin layer or layers,
wherein
the two or more resin layers include a low-Tg resin layer having the lowest glass transition temperature among the two or more resin layers,
the low-Tg resin layer is arranged so as to be off-center in the thickness direction toward either one of main surface side.

12. The interlayer film for laminated glass according to any one of claims 1 to 3, comprising two or more resin layers, wherein at least one of the resin layers has a glass transition temperature different from that of the other resin layer or layers,
wherein
the two or more resin layers includes a low-Tg resin layer having the lowest glass transition temperature among the two or more resin layers,
the low-Tg resin layer is present at the center in the thickness direction.

13. The interlayer film for laminated glass according to any one of claims 1 to 3, comprising two or more resin layers, wherein at least one of the resin layers has a glass transition temperature different from that of the other resin layer or layers, and the two or more resin layers includes two or more low-Tg resin layers each having the lowest glass transition temperature among the two or more resin layer or layers.

14. The interlayer film for laminated glass according to any one of claims 1 to 3, having a region including a colorant.

15. The interlayer film for laminated glass according to any one of claims 1 to 3, comprising one or more resin layers, wherein any of the resin layers is a resin layer having a refractive index of 1.46 or more and a glass transition temperature of 15°C or more, and
at least either one of main surfaces of the interlayer film for laminated glass has a ten point height of roughness profile Rzjis94 of 10 µm or more.

16. The interlayer film for laminated glass according to any one of claims 1 to 3, comprising one or more resin layers, wherein any of the resin layers comprises at least one selected from the group consisting of a polyvinyl acetal resin and an ethylene/vinyl acetate copolymer resin.

17. A method for producing an interlayer film for laminated glass, comprising coextrusion to produce the interlayer film for laminated glass according to any one of claims 1 to 3.

18. Laminated glass comprising the interlayer film for laminated glass according to any one of claims 1 to 3 and a pair of glass members for laminated glass, the interlayer film for laminated glass being interposed between the glass members for laminated glass.

19. The laminated glass according to claim 18, wherein the glass members for laminated glass are either bent glass or flat glass.
